# EUROPÄISCHE PATENTANMELDUNG

(11) **EP 2 063 363 A2**
(43) Veröffentlichungstag der Anmeldung: **27.05.2009**
(21) Anmeldenummer: 08169502.5
(22) Anmeldetag: 20.11.2008
(51) Int. Cl.: G06F 17/10

(54) **Schnelle Berechnung von kompakten Poset-Isomorphie-Zertifikaten**

(30) Priorität: 22.11.2007 DE 102007056522
(71) Anmelder: Geistiges Eigentum, Inc., St. Paul, MN 55102 (US)
(72) Erfinder: Dr. Eusterbrock, Jutta, 64673, Zwingenberg (DE)
(74) Vertreter: Kewitz, Ansgar

(57) **Zusammenfassung**

Zwei Methoden und Systeme für die schnelle Konstruktion von Poset-Isomorphie-Zertifikaten werden dargestellt. Posets (partiell geordnete Mengen) umfassen Graphen. Die erfundenen Zertifikate sind Zahlenfolgen mit der Eigenschaft, dass zwei Posets isomorph sind, wenn, und nur wenn ihre entsprechenden Zertifikate zusammenfallen. Die erste Methode erzeugt das (Omikron, Jota)-Isomorphie-Zertifikat, das weiter komprimiert werden kann. Das minimale Phi-Isomorphie-Zertifikat kann konstruiert werden, indem Knoten der Graphen in Phi-geordnete Symmetrie-Cluster aufgeteilt werden und eine topologische Phi-Knoten-Rangordnung erzeugt wird. Damit sind Symmetrien in Posets zu niedrigen Kosten feststellbar. Außerdem stellen die Phi-Knoten-Rangordnung und ein Poset Isomorphie-Zertifikat ein Paar von getrennten eindimensionalen Schlüsseln für die Poset-Verschlüsselung zur Verfügung. Als Poset repräsentierbare Datenobjekte, die in automatisiertem Design, Betriebssicherheit und Sicherheitsanwendungen, Bioinformatik, Management von semistrukturierten Daten, und anderen Anwendungsfeldern allgemein verwendet werden, können unter Verwendung des Isomorphie-Zertifikats mit wesentlich reduziertem Speicher- und Rechenzeitbedarf gespeichert, analysiert, indiziert und extrahiert werden.

## Beschreibung

### HINTERGRUND DER ERFINDUNG

**Feld der Erfindung**

Die beschriebene Erfindung bezieht sich auf Methoden und ein System zur Konstruktion von kompakten Isomorphie-Zertifikaten für partiell geordnete Mengen ("Posets", engl. partially ordered sets), nutzbar für den Vergleich digitaler Objekte, deren Strukturen durch Posets repräsentiert werden können. Die Erfindung bezieht sich spezifisch auf Methoden und ein System für die schnelle Konstruktion des "(Omikron (P), Jota (P)) Zertifikats", eines minimalen "Phi(P) Zertifikats", der Phi-angeordneten Symmetrie-Klassen für Posets und die dadurch induzierten Anwendungen. Jedes Poset-Isomorphie-Zertifikat ist ein kanonischer Vertreter für eine Klasse von isomorphen Posets. Die Erfindung stellt ein Paar von eindimensionalen Schlüsseln zur Verfügung, um ein als Poset repräsentiertes Objekt zu kodieren, was eine kompakte Speicherung ermöglicht.

**Diskussion des Standes der Technik**

Viele Arten von digitalen Objekten oder Datenstrukturen wie z.B. genetische Karten, "multiple sequence alignments" oder Taxonomien können nutzbringend als partiell geordnete Mengen ("Posets") interpretiert werden. Posets können als Verallgemeinerung von Graphen und Verbänden interpretiert werden. Graphen sind Konfigurationen, die charakterisiert werden durch Elemente - Knoten genannt - und Verbindungen oder Kanten. Sie werden oft verwendet, um physische Netzwerke wie Transport-Netze, Computernetze, elektrische Stromkreise, und das Internet für Analysezwecke abstrakt zu modellieren, aber auch im VLSI Design, Robotertechnilk, Compilerbau, oder Dokumentenverarbeitung auf der Basis des XML-Standards werden als Poset darstellbare Datentypen eingesetzt. Dies trifft auch zu für Programme, die Datenflussdiagramme verarbeiten, oder Strukturmöglichkeiten für chemische Zusammensetzungen ermitteln, deren Atome und chemische Bindungen als Knoten und Kanten eines Graphen repräsentiert werden, einschließlich chemischer Strukturen wie z.B, Kohlenwasserstoffe, Medikamentenbestandteile und Polymere, sowie genetischer und biochemischer Netzwerke. So wurden Graphen auch bei der Analyse von RNS-Strukturen erfolgreich eingesetzt. Außerdem werden Graphen verwendet, um Finanznetze, zum Beispiel, sog. "Marktgraphen" oder den Fluss von Wertberichtigungen in einem Netzwerk von Banken, zu modellieren. Verbandstheoretische Modelle bilden den Standardansatz zur Werteinschätzung von Aktienoptionen. In vielen weiteren Anwendungsfällen werden Datenstrukturen unter dem Begriff "semistrukturierte Daten" zusammengefasst, die mit Mitteln der elementaren Graphentheorie beschrieben werden können.

Der Begriff "poset" bezieht sich auf eine partiell-geordnete Menge mit strikter partieller Ordnungsrelation. Die Beschränkung der Analyse von Posets auf Posets mit strikter teilweiser Ordnung ist keine Beschränkung der Allgemeinheit. Eine strikt teilweise geordnete Menge ist ein Paar (V,>), bestehend aus einer Ordnungsrelation '>' und einer Menge V von Objekten oder Knoten (engl. "vertices"), "Basismenge" genannt, so dass für zwei beliebig gewählte Objekte x, y in V entweder gilt (1) x>y, oder (2) y>x, oder (3) x und y sind ohne Beziehung. Für zwei beliebige Objekte x, y in V gilt: (1) nicht x>x, (2) wenn x>y, dann nicht y>x, und (3) wenn x> y und y> z, dann x> z. Wie man sagt, sind zwei Posets (V1, >1), (V2,>2) "isomorph", wenn es eine Abbildung Pi: V1 -> V2 gibt, so dass für alle x, y in V1 gilt: x>1 y <=> Pi (x)>2 Pi (y). Eine isomorphe Abbildung der Knotenmenge auf sich selbst ist ein "Automorphismus". Für Posets mit einer großen Anzahl von Knoten und Beziehungen ist keine effiziente, d.h. nichtexponentielle, Methode zur Überprüfung der Isomorphie bekannt. Die Überprüfung des Isomorphie eines Paares von Posets erfordert zumeist einen exponentiellen Zeitaufwand im widrigsten Fall. In einer Poset-Datenbank ist nicht nur das Testen auf Isomorphie individueller Posets schwierig, es ist auch erforderlich, diese Vergleichsoperation mit allen Posets in der Datenbank durchzuführen. Die Komplexität des Problems resultiert aus zwei Faktoren: (1) die Suche nach Kandidaten unter der riesigen Zahl von Datenbankeinträgen, und (2) das Testen auf Isomorphie der selektierten Kandidaten. Die Gesamtzahl von Poset-Isomorphie-Klassen wächst exponentiell mit der Zahl von Knoten in der Trägermenge der betrachteten Posets.

Da die Zahl von Poset-Isomorphie-Klassen mit der Zahl von Knoten exponentiell wächst, wird sogar ein Isomorphie-Algorithmus mit linearer Zeitlcomplexität zu einer potentiell exponentiellen Suchkomplexität führen, wenn ein Abfrageobjekt mit allen repräsentierten Isomorphie-Klassen verglichen werden muss. In gegenwärtigen Systemen kann auf ein Objekt in O (log (|E |)) Zeit zugegriffen werden, wobei |E| die Zahl von Einträgen angibt, wenn die Datenobjekte gemäß einer numerischen Ordnung sortiert sind. Das führt zur Frage, ob es sog. "Zertifikate" für Poset-Isomorphie-Klassen gibt. Eine Funktion f von einer Klasse von Objekten C zu den natürlichen Zahlen wird genau dann ein **"Zertifikat"** in Bezug auf eine Äquivalenzrelation wie Isomorphie genannt, wenn sie die folgenden Eigenschaften hat: (i) aus f (P1) =f (P2) folgt P1 ist äquivalent zu P2 ; und (ii) ist P1 äquivalent zu P2, dann gilt f (P1) =f (P2) für alle Paare von Objekten P1, P2 in C. f ist ein **"deterministisches Zertifikat",** wenn f ein Zertifikat ist und in polynomischer Zeit berechenbar ist (vgl. [L17], Details hierzu und weitere Referenzen finden sich in der nachfolgenden Bibliographie). In gegenwärtigen Systemen ist kein deterministisches Zertifikat in Bezug auf die Isomorphie für beliebige Posets bekannt. Jedoch besteht ein Bedarf nach deterministischen Zertifikaten für beliebige Posets.

Die Identifikation von Symmetrien ist eine andere wichtige Anwendung der Poset-Isomorphie. Ein Automorphismus ist eine isomorphe Abbildung der Knoten eines Poset auf sich selbst. Die Menge aller Automorphismen eines gegebenen Poset ist die Basis der Automorphismen-Gruppe des Poset. Die Automorphismen eines Poset definieren die Automorphismen-Partition seiner Knoten folgendermaßen: Zwei Knoten v', v" sind in derselben Klasse, wenn es einen Automorphismus gibt, der v' auf v" abbildet. Poset-Automorphismus bietet einen Rahmen zur Modellierung von Symmetrien. Die Nutzung von Symmetrien kann häufig einen enormen Zeitgewinn bedeuten, indem man nur Vertreter von Klassen von symmetrischen, aber gleichwertigen Variablen betrachtet. Folglich sind Symmetrie-Entdeckung und darauf basierende Problemreduktion häufig für den Erfolg entscheidend, wenn es darum geht, Inferenzprozesse oder das Lösen von Gleichungssystemen effektiv berechenbar zu gestalten.

Fachexperten sind mit dem Graph-Isomorphie-Problem vertraut, bei dem die Entscheidung zu treffen ist, ob zwei gegebene Graphen isomorph sind, d. h. ob es eine ein-eindeutige Abbildung von den Knoten des einen Graphen zu den Knoten des zweiten Graphen gibt, bei der die Kantenverbindungen respektiert werden. Es ist bekannt, dass das Graph-Isomorphie-Problem effizient in ein Poset-Isomorphie-Problem übersetzt werden kann [L5]. Insbesondere ungerichtete Graphen können als bipartite Posets betrachtet werden, da jeder Graph in ein bipartites Poset umgestaltet werden kann, indem jede Kante durch zwei gerichtete, mit einem neuen Knoten verbundene Kanten ersetzt wird. Folglich repräsentieren Paare von Kanten, die mit den oberen Knoten dieses bipartiten Poset verbunden sind, die Kanten und die unteren Knoten die Knoten des ursprünglichen Graphen.

Viel Forschung ist dem Graph-Isomorphie-Problem gewidmet worden. Abgesehen von der gegenwärtigen Erfindung ist jedoch weder ein effizienter (d.h. auch im schlechtesten Fall polynomischer) Algorithmus bekannt, um zu überprüfen, ob zwei beliebige Graphen isomorph sind, noch wurde die Vermutung bewiesen, dass solch ein Algorithmus existieren kann. Bestimmte komplexitätstheoretische Beweise legen aber die Vermutung nahe, dass das Problem kaum NP-vollständig sein wird [L15]. Wenn die Klasse von zu betrachtenden Graphen eingeschränkt wird, kann in vielen Fällen das resultierende weniger komplizierte Isomorphie-Problem durch Algorithmen mit polynomischer Zeitkomplexität gelöst werden. Zum Beispiel, wenn die Knoten-Grade durch eine Konstante begrenzt werden, führt der gruppentheoretische Algorithmus von Luks eine Isomorphie-Prüfung in polynomischer Zeit durch [L16]. Es gibt mehrere allgemeine Graph-Isomorphie-Algorithmen, aber es gibt immer Fälle, für die die bekannten Algorithmen nicht effizient oder sogar nicht fähig sind, überhaupt eine Lösung zu finden [L21]. Außerdem ist - abgesehen von einem aktuellen Vorschlag basierend auf sog. "quantum walks"[L8], dessen Ausführbarkeit noch zu beweisen ist - kein Ansatz bekannt, der einem Quantum-Computer ermöglichen würde, Graph-Isomorphie in polynomischer Zeit zu überprüfen. Eine kürzlich veröffentlichte, aber noch nicht verifizierte Methode zum Testen von Graphen auf Isomorphie soll nach Aussage des Autors komplexe mehrdimensionale Listenstrukturen in polynomialer Zeit berechnen, die als sog. Graphinvarianten dienen [P5]. Aber auch dieser Ansatz erlaubt nicht, Isomorphiezertifikate für allgemein als Poset darstellbare Objekte zu berechnen. Graph-Isomorphie muss unterschieden werden vom Subgraph-Isomorphie-Problem, in dem die Aufgabe darin besteht, zu entscheiden, ob es einen Subgraphen des ersten Graphen gibt, der zum zweiten Graphen isomorph ist. Das Subgraph-Isomorphie-Problem ist als NP-vollständig nachgewiesen. Trotz der vorher erwähnten Fortschritte besteht ein Bedarf nach einer effizienten (im schlechtesten Fall polynomischen) Methode und einem darauf basierenden System für die Entscheidung, ob zwei beliebige Graphen isomorph sind.

Der Zusammenhang zwischen Poset- und Graph-Isomorphie impliziert, dass, wenn ein effizientes System zur Behandlung von Klassen isomorpher Posets entwickelt werden kann, auch ein effizientes System zur Bearbeitung von Graphkollektionen implementiert werden kann, indem das Posetkodierungssystem um eine Vor- und Nachverarbeitungseinheit ergänzt wird, die Graphen in entsprechende Posets (und umgekehrt) umwandelt. Es gibt viele Probleme von theoretischer, praktischer und technischer Relevanz, die effizient in Graph-Isomorphie-Probleme übersetzt werden können. Man nennt ein Problem "Graph-Isomorphie-vollständig", wenn es nachweislich ebenso komplex ist wie das Graph-Isomorphie-Problem. Das Entscheidung, ob zwei Terme gleich sind, die assoziative, kommutative und assoziativ-kommutative (ansonsten uninterpretierte) Funktionssymbole und kommutative variablenbindende Operatoren enthalten, ist effizient reduzierbar auf einen Test der Isomorphie zweier Graphen [L1]. Die Probleme der Isomorphienachweise für Halbgruppen, kontextfreie Grammatiken oder endliche Automaten sind ebenfalls effizient reduzierbar auf Graph-Isomorphieprobleme. Als weiteres Beispiel Graph-Isomorphie-vollständiger Probleme erwähnen wir den Nachweis der Gleichheit zweier RDF-Modelle (vgl. [L6]).

Diese und viele andere praktisch relevante Anwendungen verlangen einen schnellen Algorithmus zum Nachweisen der Isomorphie von zwei Graphen. Die Überprüfung des Isomorphie von zwei Graphen ist von hoher Wichtigkeit in zahlreichen praktischen Gebieten wie Chemie, Bioinformatik, Kryptographie, Digitaltechnik, Programm-Analyse, Computer-Aided Design, Programm-Verifikation, Sicherheit und Sicherheitsüberprüfung, Bildverstehen und Szenenanalyse, Gegenstandserkennung, Multimediadokumentenmanagement, Netzwerkplanung, Roboterkonstruktion, Maschinenbau usw. In den meisten Fällen schließt die Aufgabe sowohl das Vergleichen von Paaren von Graphen als auch die Suche in großen Datenbanken oder sogar im Internet nach isomorphen (ähnlichen) Objekte ein. Mit dem stetig wachsenden Bestand an Daten wird es notwendig sein, Millionen von Vergleichen innerhalb einer Datenbank durchzuführen, oder eine Indexierungsmethode zu verwenden, die effiziente Suchstrategien auf diesen komplexen Objekten unterstützt. Zur Zeit sind solche Indexierungsmethoden für spezifische Graphtypen (z.B. Bäume, Verbände) bekannt, aber nicht für allgemeine Graphen oder Posets. Zum Beispiel beschreibt [P3] eine Methode und Vorrichtung zur effizienten Verwaltung einer Kollektion von Verbandobjekten. Anstelle von Einschränkungen bezüglich der formalen Eigenschaften der zu speichernden Objekte nutzen einige aktuelle Entwürfe für Graphdatenbanken Annahmen über die zu verwaltende Objektkollektion: [P4] umreißt ein Indexierungsschema für Graphen, das auf häufig auftretenden Teilgraphen basiert, die als "Indexterme" für die Graphobjekte dienen. Ein Graphisomorphie-Zertifikat mit polynomischer Zeitkomplextät könnte dagegen einmal angewandt werden, um einen Zertifikat-Code (G) für einen gegebenen Graphen zu erzeugen, und dann könnte dieses Zertifikat des gegebenen Graphen mit den in der Datenbank gespeicherten Zertifikaten in einer durchschnittlichen Zeit O (|code (G)| * log(N)) verglichen werden, wobei die Datenbank anhand der Zertifikate vorsortiert sein kann. Dieses Vorgehen stellt eine allgemein anwendbare Lösung für die Verwaltung großer Bestände an komplexen Objekten dar, die nicht von spezifischen Eigenschaften der Objekte oder der Kollektion abhängt. Deshalb kann ein System bzw. einer Methode, die ein deterministisches, in polynomischer Zeit berechenbares Graphisomorphie-Zertifikat verwendet, eine generell verwendbare Lösung für das Management großer Datenbanken sein, die beliebige komplexe Objekte enthalten können.

Im folgenden werden einige spezifische beispielhafte Anwendungen skizziert, in denen die vorliegende Erfindung mit Vorteil eingesetzt werden kann. Dabei wird auf die Besonderheiten der Anwendungsfälle kurz eingegangen.

**(1) Computer-Aided Design (CAD)**

In der Technik werden komplizierte Systeme gewöhnlich als eine Konfiguration von kleineren Bestandteilen beschrieben. Eine Konfiguration kann als Graph von miteinander verbundenen Bestandteilen angesehen werden. Eine bei diesen Ansatz auftretende Schwierigkeit bei der Lösung von Konfigurationsproblemen ist die Existenz von vielen Strukturisomorphien[L13]. Eine der Motivationen, die Ähnlichkeit von Teilen zu quantifizieren, besteht darin, ähnliche Teile oder Bestandteile in einer großen Datenbank oder sogar im Internet ausfindig machen zu können. Die Beliebtheit von 3D CAD-Systemen im Produktdesign und der Fertigungsindustrie führt zu einer großen Zahl von unabhängig erzeugten CAD-Modellen. Die Techniken zur Messung der Ähnlichkeit von 2D Modellen reichen für 3D Modelle nicht aus. Die Ähnlichkeitsbewertung in 3D Fällen wird gewöhnlich ausgeführt, indem "Gestalt-Zertifikate" von den 3D Modellen erzeugt und dann diese Zertifikate verglichen werden, wobei entsprechende Metriken zum Einsatz kommen. Eine Technik besteht darin, Graphen als Gestalt-Zertifikate für 3D Modelle zu verwenden. Der Vergleich kann dann durch die Graph-Isomorphie-Prüfung ausgeführt werden[L14]. Auf Graph-Isomorphie beruhende Techniken[L4] werden verwendet, um den Suchraum für die Fertigungsplanung auf einer abstrakten Ebene und für die Verbindungstopologie-Synthese für eingebettete Prozessoren zu optimieren. Nur bis auf Isomorphie eindeutige Graphen werden betrachtet. Das Ergebnis ist eine Verminderung der Suchkomplexität um Größenordnungen. In vielen Gebieten der Designautomation finden sich Beispiele des Boolean satisfiability (SAT) Problem, wie z.B. Mikroprozessor-Verifikation und FPGA Layout. Es ist nachgewiesen, dass die Ausnutzung von Symmetrien die Laufzeiten von SAT Programmen erheblich reduziert. Die Aufdeckung von Symmetrien kann durchgeführt werden, indem aus der konjunktiven Normalform ein Graph abgeleitet und eine generierende Menge der Automorphismen-Gruppe des Graphen ermittelt wird. Symmetrie-basierte Reduktionstechniken verwendet man außerdem in der Synthese von Logikschaltungen und DSP Algorithmen erfolgreich. Dort besteht ein Bedarf nach einer schnellen Symmetrieaufdeckung, um die Gesamtberechnungszeit zu reduzieren.

**(2) Bildverstehen und Mustererkennung**

Graph-Isomorphie wurde eingesetzt bei Gegenstandserkennung und Klassifikationsaufgaben, wie sie einem Roboter-Arbeitsraum bestehen[L7]. Eine zuverlässige und einfache Methode, um Isomorphie von Paaren von kinematischen Ketten nachzuweisen, mit denen Roboter und Werkzeugmaschinen modelliert werden, ist auch wünschenswert. Weitere Anwendungen eines Tests auf Graph-Isomorphie umfassen die Erkennung einfacher Bildstrukturen, Gesichtern, Schriftzeichen und Symbolen. Es wird die Auffassung vertreten, dass mit besseren Graph-Isomorphie-Methoden die Verfahren verbessert werden können, mit denen die Rillen von Fingerabdrücken abgeglichen werden. Graph-Isomorphie ist auch eine wesentliche Komponente beim sog. Pictographic Matching [L22].

(3) **Effizienz und Sicherheit: Aspekte bei Analyse und Design komplexer Systeme**

Auf Graph-Isomorphie beruhende Methoden und Algorithmen, um Unterschiede zwischen zwei Versionen einer binären ausführbaren Datei zu finden, sind bekannt[L19]. So diskutiert [L9] eine Methode, die erlaubt, iterativ einen Isomorphismus zwischen zwei unterschiedlichen, aber ähnlichen Maschinencodes zu konstruieren. Solch ein Isomorphismus hat vielfache interessante Anwendungen: Er erlaubt ein schnelles Reverse Engineering von Sicherheitsupdates, eine automatische Klassifikation von bösartiger Software und das Entdecken von Codediebstählen. Systeme für die Sicherheitsüberprüfung von Software mit Querverweisen sind zwar konzipiert worden, aber der Engpass in diesen Systemen ist die exponentielle Laufzeitkomplexität infolge von ineffizienten Tests auf Graph-Isomorphie. Auch die Analyse der Eigenschaften von Zustandräumen, die durch ein Modell-Checking Verfahren erzeugt werden, schließt Isomorphie-Prüfungen ein. Dynamische Datenstrukturen mit Zeiger-Verbindungen verursachen äußerst schwierige Überprüfungsprobleme. Für die Überprüfung von Softwaresystemen mit indirekten Beziehungsketten sind Reduktionstechniken auf der Basis von Automorphismen-Symmetrie untersucht worden[L23], denn es besteht ein Bedarf nach einem praktikablen Ansatz für die effiziente Überprüfung solcher Softwaresysteme

Graphen mit Millionen von Knoten oder mehr sind in vielen Gebieten charakteristisch. Zum Beispiel skizziert [P1] graph-basierte Methoden zum Modellieren und zur Analyse von Programmen, mit besonderem Augenmerk auf Code in Hardwarebeschreibungssprachen (HDL). Ein kürzlich eingereichter Patentantrag [P2] setzt ähnliche Methoden ein, um große Schaltungsentwürfe in funktionale Teilnetzwerke zu zerlegen, die effizient als Bitfolgen kodiert und für eine zukünftige Wiederverwendung in einer Datenbank abgespeichert werden. Der Vorschlag beschränkt sich nur auf Methoden, die spezifische Eigenschaften der funktionalen Teilnetzwerke nutzen. Aber auch generische graphtheoretische Verfahren können im Hardwaredesign sehr nützlich sein. So ist gezeigt worden, dass die Korrektheit eines VLSI-Schaltungs-Layouts nachgeprüft werden kann mit Hilfe von Techniken zur Lösung des klassischen Graph-Isomorphie-Problems[L10]. Diese Werkzeuge sind zur Zeit noch nicht effektiv bei der Verifikation von Schaltungen einsetzbar, die mehrere zehn Millionen von Transistoren enthalten. Aussagenlogische Formeln, die als Modelle für Verifikationsprobleme erzeugt werden, weisen häufig beträchtliche Struktursymmetrien auf - viele Anordnungen der Variablen laufen auf die dieselbe Formel hinaus[L20]. Die Nutzung von Symmetrien kann häufig die Komplexität der Beweisführung reduzieren. Jedoch kann es teuer sein, mit den bekannten Techniken die Äquivalenzklassen exakt zu bestimmen. Dementsprechend besteht ein Bedarf danach, zum Aufdecken von Symmetrien Graph-Isomorphie-Techniken zu verwenden.

**(4) Chemische und Biologische Datenbanken**

Die Verwaltung von Graph-Daten stellt schon seit langem das Fundament für chemische und biologische Information-Retrieval-Systeme dar. Die chemischen Industrie hat umfassende Datenbanken sowohl von zweidimensionalen als auch von dreidimensionalen Strukturen chemischer Moleküle angelegt, und eine Vielfalt von Data-Mining-Werkzeugen werden alltäglich verwendet, um die Entdeckung von neuartigen Arzneimitteln und Agrochemikalien zu unterstützen. Die Hauptmethode der Darstellung für eine zweidimensionale chemische Struktur oder ein dreidimensionales Molekül ist ein markierter Graph, in dem die Knoten die Atome und Kanten die Bindungen eines Moleküls vertreten. Viele Arten von Daten, die in der Bioinformatik entstehen, können als Graphen repräsentiert werden. Biopathways sind eines der wichtigsten Beispielen solcher Graph-Daten. Es ist gezeigt worden, dass ein Vergleich der stochiometrischen Strukturen von zwei Reaktionssystemen - ein entscheidendes Problem beim Verstehen der im Genom verschlüsselten Mechanismen - äquivalent zum Graph-Isomorphie-Problem ist[L11]. Eine chemische und/oder biologische Datenbank kann folglich als eine große Zahl von besonderen Graphen interpretiert werden. Die Suche nach einer chemischen Struktur umfasst eine Suche mit genauem Abgleich einer chemischen und/oder biologischen Datenbank mit einer spezifischer Abfragenstruktur. Eine Variante einer solchen Suche kann eine Graph-Isomorphie-Suche sein, in der der Graph, der die Frage beschreibt, bezüglich einer Isomorphie mit den Graphen in der Datenbank überprüft wird. Dabei besteht ein Bedarf danach, effiziente Graph-Isomorphie-Techniken anzuwenden, um diesen Typ der Suche durchzuführen

**(5) Management von Wissen, Multimedia und Dokumenten**

In vielen anderen Gebieten stellen Graphen in verschiedenen Formen das zu Grunde liegende Konzept zur Verfügung, um Objekte und Prozesse zu modellieren. Zum Beispiel verwendet man in der Softwaretechnik eine Vielzahl auf Graphen beruhender Modell-Ansätze (z.B. Datenflußdiagramme von Computerprogrammen), Sprachen (z.B. UML), und ISO-Standards, um nichtlineare Aspekte von Arbeitsabläufen, Datenflüssen, Datenabhängigkeiten, Projektorganisationen, Vektorgrafiken usw. zu erfassen. Web computing vereinigt die auf Graphen basierten Ansätze einer Vielfalt von Disziplinen: Objekte, Dokumente, und Dienstleistungen werden unter Verwendung von HTML und XML dargestellt, Metadaten werden in zahlreichen auf XML und RDF basierten Formaten repräsentiert. Auch das Web ist als Ganzes ist Gegenstand von Modellierungsansätzen, Webgraphen spielen eine Hauptrolle in Design und Betrieb von Suchmaschinen. Außerdem treten in vielen weiteren Anwendungsgebieten graphbasierte Modelle auf, hier einige Beispiele: formale Ausdrücke in der Linguistik, Kundenbeziehungsmodelle (CRM) im elektronischen Handel oder Marktmodelle in Optimierungsansätzen der Finanzmathematik. Bei der Suche nach solchen Modellen kann für eine spezifische Frage eine Suche nach einer exakten Entsprechung in einer Datenbank erfolgen. Solch eine Suche schließt eine Graph-Isomorphie-Suche ein, in der der Graph, der das gesuchte Modell beschreibt, auf Isomorphie mit den Graphen der Datenbank überprüft wird. Dabei besteht ein Bedarf nach einer effizienten Methode, um isomorphe Graphen recherchieren.

**(6) Kompakte Verschlüsselung**

In einem eingebetteten System werden Instruktionen dauerhaft gespeichert, zum Beispiel, in einem ROM oder Flash-Speicherchip. Die Kosten, die Instruktionen auf einem Chip zu speichern, können ebenso hoch sein wie die Kosten eines Mikroprozessors. Das Kompaktifizieren eines Codes, um die Größe des erforderlichen Speichers zu reduzieren, ist eine oft angewandte Kostenminderung. Einige RISC Prozessoren unterstützen die aggressive Codegrößenverminderung sogar auf Kosten eines bedeutenden Leistungsverlustes. Die Technik der Codekompression nutzt Methoden der Datenkompression, um die Codespeichergröße für speicherbeschränkte, eingebettete Computer zu reduzieren. Die Instruktionen werden komprimiert und im eingebetteten System gespeichert. Zur Laufzeit werden die komprimierten Instruktionen inkrementell dekomprimiert und ausgeführt. Während komprimierte Codes eine höhere Informationsdichte aufweisen, ist ihre Leistung normalerweise niedriger, weil zusätzlicher Aufwand erforderlich ist, den Instruktionsstrom zu dekomprimieren. Es wurde gezeigt, dass die Folge von Instruktionen durch einen Datenfluss-Graphen verschlüsselt werden kann. Folglich besteht auch hier ein Bedarf nach einem verbesserten physischen Prozess, in dem Instruktionen effizient und ohne irgendwelche Redundanz komprimiert werden. Eine geeignete Instruktionskompression kann unter Verwendung Phi-Schlüssel-Paaren erfolgen, indem die graphbasierte Repräsentationen eingebetteter Programme gespeichert werden.

**(7) Das Codieren von Schemas und Speicherung von seynistrukturierten Daten**

Konsortien aus Wissenschaft, Behörden und Industrie erarbeiteten weithin akzeptierte Standards für Klassifikationen und Prozessbeschreibungen, die in der Form von Digraphen strukturiert sind, wie der Genontologie-Digraph, und die medizinischen Nomenklaturen ICD-9, ICD-10, oder SNOMED. Ein einheitliches Codierschema für die konsistente Darstellung der Mechanismen wird entwickelt, indem nichtisomorphe geschlossene Graphen identifiziert werden, sowie eine eindeutige Aufzählung für die darin enthaltenen Verbindungen höherer Ordnung, so dass ein konsistentes Codierschema für alle Klassen von Mechanismen zur Verfügung steht. Daten werden dann mit diesen Klassifikationen assoziiert, wodurch eine komplexe semistrukturierte Datenmenge entsteht. Die wissenschaftliche Arbeit in Zusammenhang mit der Erforschung des menschlichen und anderer Genome hat massive Daten mit Querverweisen zu komplexen Graphen und Strukturen erzeugt. Das Indexieren von semistrukturierten Baumdaten wird von allen größeren Datenbankanbietern in der einen oder anderen Form ermöglicht, wie zum Beispiel sowohl im DB2 Datenbanksystem von IBM als auch im Oracle-Datenbanksystem. Leider unterstützen relationale Datenbanken im Falle von Datenschemata mit Multi-Hierarchien das Management solcher Daten nicht effektiv, und es fehlt an Möglichkeiten, auf Daten durch polyhierarchische Fragen zuzugreifen. Zahlreiche Forschungsansätze für Datenbanksysteme, die semistrukturierte Datenobjekte managen, wobei letztere auch in anderen Formaten wie XML (eXtensible Markup Language) auftreten, werden bei Versuchen eingesetzt, das Zugriffsproblem zu überwinden. Trotz dieser Anstrengungen besteht noch ein Bedarf nach einer mathematisch ausgearbeiteten Methode und darauf basierenden Systemen, um alle relevanten Mitglieder einer isomorphen Klasse von Objekten erfassen und jene Datenobjekte zu extrahieren, die zu einem gegebenen Objekt isomorph sind.

**(8) Effiziente physische Speicherung und Übertragung von extrem großen Objekten**

Die Verschlüsselung einer kleinen Posetstruktur ist einfach. Die Speicherung und das Übertragen eines Poset mit einer großen Anzahl von Knoten und Kanten in Systemen mit beschränkter Speicherkapazität, oder auf Geräten mit sehr beschränktem Speicherplatz ist eine technische Herausforderung. Modelle von Verkehrsnetzen, Hochspannungsnetzwerken, Computernetzen (z.B. das Internet), sozialen Netzwerken, oder von Intranets großer Firmen werden als Graphen repräsentiert. Ein anderes Beispiel eines riesigen Graphen ist der Webgraph. Ein Webgraph repräsentiert die Verbindungsstruktur des WWW, und kann verwendet werden, um verschiedene Eigenschaften des Webs zu studieren. Es gibt verschiedene Ziele bei der Modellbildung, die betrachtet werden: (1) Die Kompression des zu Grunde liegenden Graphen für eine Speicherung oder Übertragung, wobei der Graph bis auf Isomorphie eindeutig rekonstruierbar ist. Diese Einstellung ist nützlich, wenn nur die Graph-Struktur selbst von Interesse ist. (2) Die Kompression des zu Grunde liegenden Graphen für eine Speicherung oder Übertragung, wobei die mit den Knoten des Graphen assoziierte Information erhalten bleibt. (3) Die Kompression des zu Grunde liegenden Graphen, wobei noch effiziente Berechnungen auf der komprimierten Form durchführbar sein sollen. Matrixdarstellungen, mit denen üblicherweise der Webgraph repräsentiert wird, sind äußerst groß und spärlich besetzt, was es unmöglich macht, sie bei Berechnungen vollständig im Hauptspeicher zu behalten. Effiziente Kompressionsmethoden sind erforderlich und sind daher Gegenstand der aktuellen empirischen Forschung. Es besteht hier ein Bedarf nach einer Methode und System, um sehr kompakte Verschlüsselung von wenig vernetzten Graphen zur Verfügung zu stellen, die weitere Kompression unnötig macht.

### KURZDARSTELLUNG DER ERFINDUNG

Viele in technischen und wirtschaftlichen Anwendungen verwendete digitale Datenobjekte sind als partiell geordnete Mengen (Posets) darstellbar. Ein grundsätzliches Ergebnis der gegenwärtigen Erfindung bezieht sich auf die effiziente (polynomische) Konstruktion von Isomorphie-Zertifikaten für beliebigen Posets in der Form von endlichen Zahlenfolgen. Die Zahlenfolgen unterscheiden genau zwischen Klassen von isomorphen und nichtisomorphen Posets und somit stellt die gegenwärtige Erfindung eine Methode und ein System für die Isomorphie-Überprüfung von Posets zur Verfügung, die schnell und effizient sind. Weil die Zertifikate durch Zahlenfolgen dargestellt werden, definieren sie eine numerische Ordnung auf den Repräsentanten der Poset-Isomorphie-Klassen, was einem entsprechend programmierten Gerät ermöglicht, sie zu vergleichen und einzuordnen. Fachexperten wissen, dass eine Reihe von Objekten, insbesondere Graphen, effizient in Posets transformiert werden können und folglich die Erfindung eine effiziente Methode realisiert, um Isomorphie-Zertifikate für Graphen zu konstruieren. Die hier vorgestellte Erfindung ist offenbar die erste, die eine effiziente Methode für die Isomorphie-Überprüfung von beliebigen Posets und Graphen, und außerdem Mittel zur Verfügung stellt, um ein Paar von beliebigen Posets zu vergleichen.

Die Zertifikate erlauben Benutzern, Wissen über Posets oder Graphen in Suchbäumen zu organisieren, die die Zertifikate als Indizes verwenden. Auf diese Weise werden Such- und Aktualisierungsoperationen mit logarithmischer Zeitkomplexität erreicht. Zum Beispiel erfordert die Suche nach einem bestimmten Poset mit 11 Knoten, das zu einem der möglichen 46.749.427 nichtisomorphen Posets mit 11 Knoten in einer Datenbank isomorph ist, 26 Vergleiche, wenn die Datenbankeinträge durch ihre Zertifikate indiziert werden. Indem Tupel für die Poset Darstellung verwendet werden, ist das Problem der Isomorphie-Prüfung von Strukturen in jedem Einzelfall in einen im Vergleich dazu extrem effizienten numerischen Abgleich transformiert worden.

Die hier beschriebene Erfindung bezieht sich spezifisch auf eine Methode für die schnelle Konstruktion des (Omikron (P), Jota (P)) Zertifikats, das dann verwendet wird, um die Phi-Ordnung der Symmetrie-Klassen zu bestimmen, weiterhin eine charakteristische topologische Sortierung der Knoten, der Phi-alpha-Sortierung, zu bestimmen und schließlich das Phi (P) Isomorphie-Zertifikat zu konstruieren. Das Phi (P) Poset Isomorphie-Zertifikat ist ein Code, der unter allen Codes minimal ist, die einen Poset P' darstellen, das zu P isomorph ist. Der griechische Buchstabe Phi wird hier verwendet, um die "Fusion" der Omikron- und Jota-Codes zu symbolisieren. Außerdem stellt die hier beschriebene Erfindung ein Paar von Schlüsseln zur Verfügung, die Posets eindeutig charakterisieren: die kanonische topologische Phi-alpha-Sortierung der Knoten eines Poset als ein erster Schlüssel und und das Phi- oder (Omikron, Jota) Isomorphie-Zertifikat als ein zweiter Schlüssel. Die Phi-Schlüssel können getrennt gespeichert werden.

Die hier beschriebene Erfindung stellt einen praktischen Rahmen zur Lösung mehrerer Aufgaben zur Verfügung, einschließlich: (1) dem Verwenden der Zertifikate für effiziente Poset-Isomorphie-Tests, die durch den Vergleich der Zertifikate realisiert werden, wobei die Posets entsprechend der Vergleichsresultate geclustert werden können, wodurch effiziente Poset Datenbanken aufgebaut werden können; (2) der effizienten Entdeckung von Symmetrien und Rangordnungen der Symmetrie-Klassen, die in der Kombination mit Symmetrie-basierten Problemreduktionsstrategien effiziente automatisierte Design- und Verifikationsverfahren insbesondere für Hardware- und Softwaresysteme ermöglichen, und (3) einer kompakten Verschlüsselung von als Poset repräsentierbaren Daten beruhend auf einem Paar von Schlüsseln, das aus einem Isomorphie-Zertifikat und der kanonischen topologischen Phi-alpha-Sortierung der Knoten gebildet wird.

Die hier beschriebene Erfindung stellt eine effiziente Methode und System zur Verfügung, um Symmetrien zu entdecken und Symmetrie-Klassen zu ordnen. Die symmetriebasierte Reduktionsstrategien können verwendet werden, um Teilprobleme zu erhalten, die effektiv berechenbar sind, oder um die Leistung bekannter Design- und Verifikationswerkzeuge außerordentlich zu verbessern. Gruppen von Knoten mit ähnlichen Verbindungsmustern werden durch die Phi-Symmetrie-Ordnungen automatisch identifiziert. Außerdem stellt die hier beschriebene Erfindung kompakte Phi-Schlüsselpaare zur Verfügung, die Posets eindeutig bestimmen. Diese Phi-Schlüssel können getrennt auf einer Vielfalt von Speichergeräten gespeichert werden.

Die hier beschriebene Erfindung stellt eine elaborierte Methode und ein System für kompakte Datenspeicherung zur Verfügung. Insbesondere wird ein Verfahren für das Management und die Analyse von großen Beständen semistrukturierter Daten zur bereitgestellt, auf die durch ein als Poset strukturiertes Schema Querverweise bestehen: (1) der Phi-Code des Schemas wird bestimmt und physisch gespeichert, (2) für jeden Datensatz wird die Phi-alpha-Sequenz der Knoten des strukturierten Datensatzes bestimmt und auf einem oder einer Gruppe von verteilten physischen Speichermedien abgelegt. Die Phi-alpha-Kodierung erfordert deutlich weniger Speicherkapazität, trotzdem werden polyhierarchische Strukturen aufrecht erhalten, so dass die Datenobjekte effizient rekonstruiert werden können, wenn die Phi-alpha-Sequenz in der Kombination mit dem Phi-Code dekodiert wird. Die hier beschriebene Erfindung ermöglicht eine kompaktere physische Speicherung von Datenobjekten, Klassenrepräsentationen und entsprechender Information, die als Posets auf einem physischen Medium dargestellt werden kann. Insbesondere stellt sie eine kompakte Speicherung von ausführbaren Programmen zur Verfügung. Dabei werden Anweisungen effizient komprimiert, indem (1) Phi-alpha-Sequenz und (2) Phi-Code aus dem Programm generiert wird, so dass die Phi-alpha-Sortierung der Instruktionen in Speichermedien abgelegt, zur Ausführungszeit effizient dekomprimiert und von einem Prozessor in einen Datenfluss-Graphen transformiert werden kann, der den Phi-Code aus einem der Speichermedien ausliest. Die hier beschriebene Erfindung stellt weiterhin eine Methode und System zur Verfügung, um eine sehr kompakte Verschlüsselung von gering vernetzten Graphen zu realisieren, die keine weitere Kompression benötigt.

Die hier beschriebene Erfindung stellt eine Lösung des Problems zur Verfügung, große Bestände von Posets und Graph-strukturierten Daten zu verwalten, inklusive, aber nicht beschränkt auf chemische Strukturen, Modelle des Internet, Bilddaten, Konstruktionspläne und ähnliches. Zusätzlich zu den bisher skizzierten Eigenschaften und Charakterisierungen beschleunigt die hier beschriebene Erfindung die Auswahl an Kandidaten, die potentiell identisch, isomorph oder ähnlich zu gegebenen Bezugsobjekten sind, ohne alle im physischen Speichermedium Daten vorhandenen zu bearbeiten zu müssen, und jene Kandidaten effizient auf Isomorphie zu überprüfen und die isomorphe Abbildung zu bestimmen, falls diese benötigt wird. Dies wird durchgeführt, indem Indizes und Bezeichnerschemata aufgebaut und verwaltet werden, die auf den erfundenen Zertifikaten beruhen.

Die Erfindung stellt eine Methode und daraufberuhende Vorrichtung dar, um eine Anzahl von als Poset repräsentierbaren Digitaldaten Dl..., Dn zu vergleichen, und sie in sortierten Clustern auf einem Computersystem anzuordnen, welche folgende Schritte umfasst: Das Umwandeln jedes Digitaldatenobjekts D in einen Poset P; die Nutzung der (Omikron(Pj),Jota (Pj)) Codes, j=1, ..., n, der entsprechenden Posets Pl..., Pn für die Clusterung; wobei: (I) für jedes Paar von Objekten D', D" im selben Cluster die zugehörigen Omikron-Jota Poset-Codes identisch sind -- wobei aus der Identität von (Omikron (P'), Jota (P')) und (Omikron (P"), Jota (P")) für ein Paar von Posets P' und P" aus der Menge P1, ..., Pn, folgt, dass P' zu P" isomorph ist, und Nichtidentität bedeutet, dass P' und P" nicht isomorph sind, -- und (ii) die Cluster gemäß der durch die (Omikron, Jota) Codes induzierten Ordnungsrelation sortiert wird.

Weiterhin stellt die Erfindung eine Methode und Vorrichtung zur Verfügung, um symmetrische Elemente von digitalen Datenobjekten auf einem Computersystem zu entdecken, bestehend aus folgenden Schritten: Das Umwandeln eines digitalen Datenobjekts D in ein Poset P; für jeden Posetknoten v die Bestimmung seines Phi-Symmetrie-Rangs Phi-sym (v), der dadurch charakterisiert ist, dass (i) symmetrische Knoten identische Phi-Symmetrie-Ränge haben, (ii), sich die Phi-Symmetrie-Ränge für Paare von nichtsymmetrischen Knoten unterscheiden, und (iii), die Phi-Symmetrie-Ränge strikt linear geordnet sind.

Die Erfindung wird später mit Bezug auf die folgenden Zeichnungen detailliert beschrieben.

### KURZE BESCHREIBUNG DER ZEICHNUNGEN

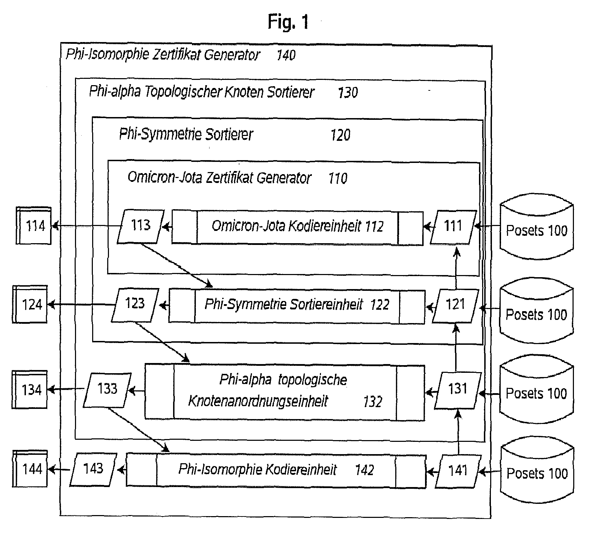

Abb. 1 illustriert die hierarchischen Beziehungen zwischen den neu eingeführten Methoden.

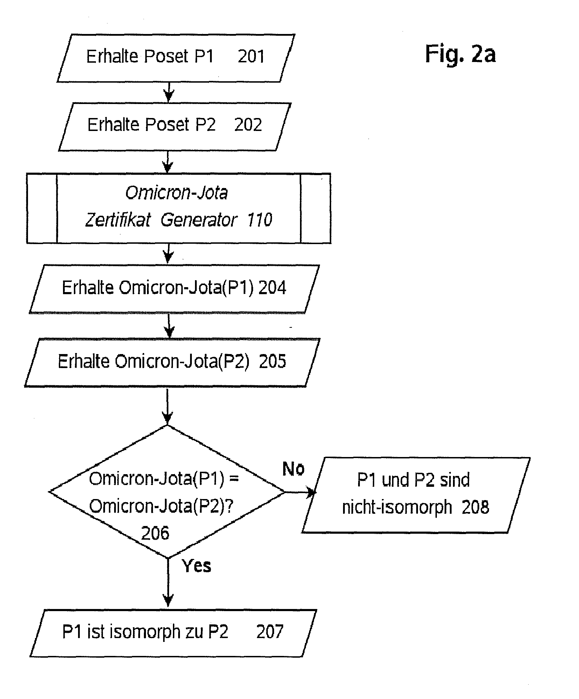

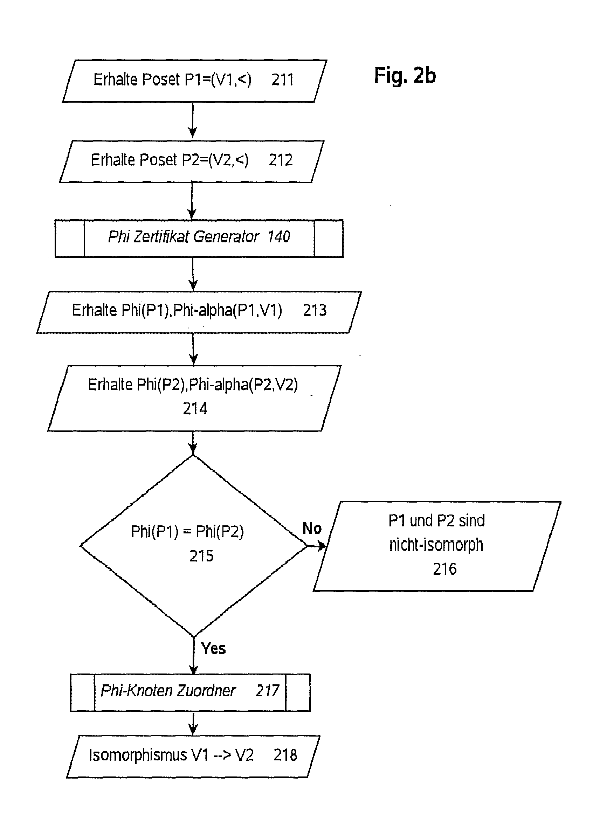

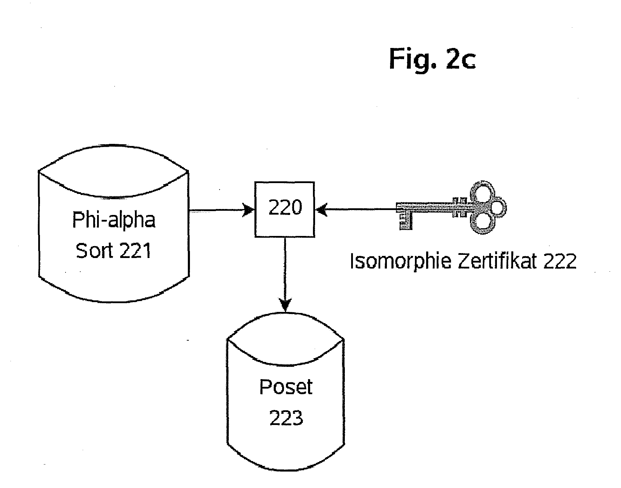

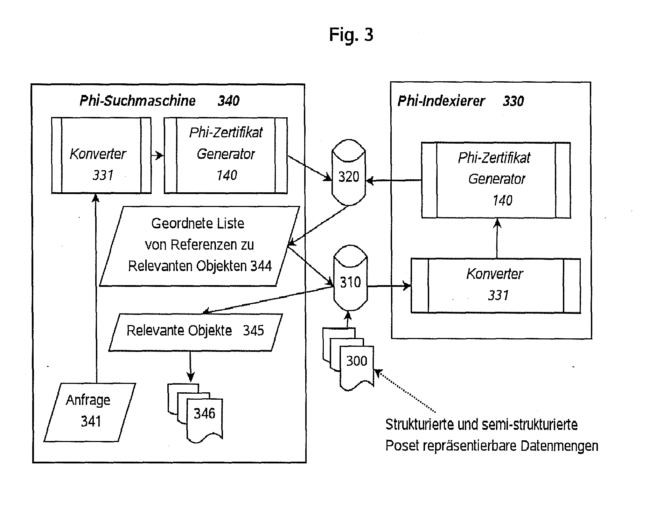

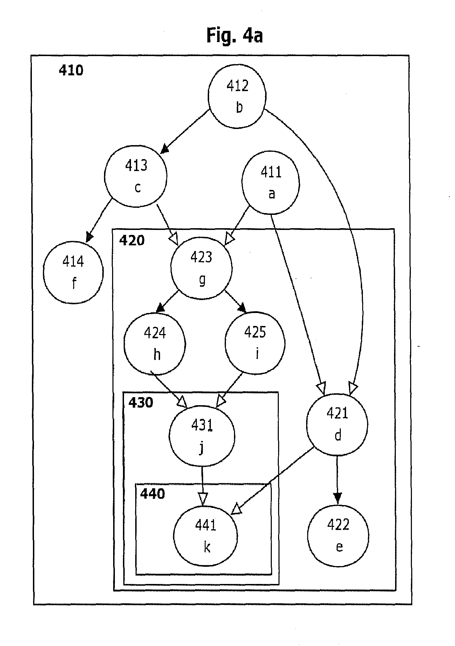

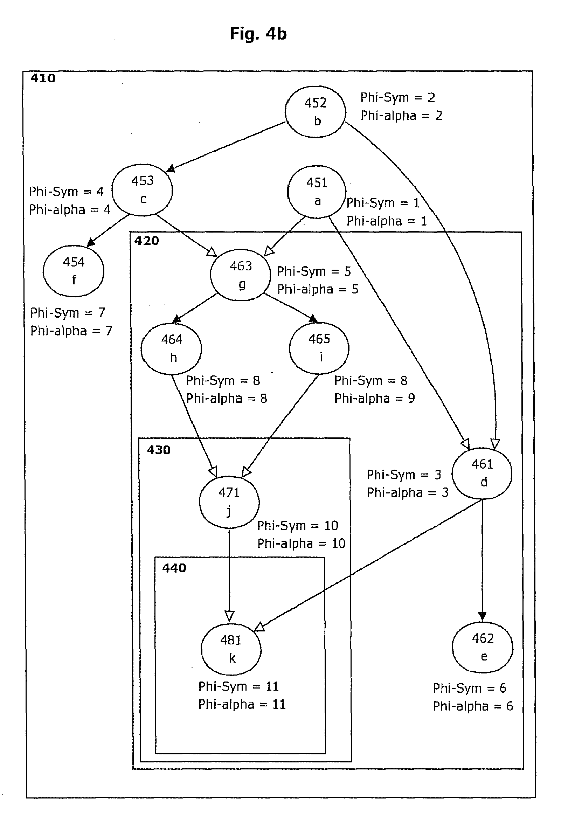

Abb. 2.a, 2.b, 2.c und 3 illustrieren einige der vielen potentiellen Anwendungen der Erfindung. Abb. 2.a ist ein Ablaufdiagramm, das den Prozess des Isomorphie-Zertifizierung eines Paares von Posets zeigt. Abb. 2.b demonstriert die Konstruktion einer Isomorphieabbildung zwischen zwei Posets. Abb. 2.c demonstriert die Poset-Verschlüsselung durch ein Paar von getrennten Schlüsseln, der Phi-alpha-Knoten-Rankgfolge zusammen mit einem Isomorphie-Zertifikat. Abb. 3 illustriert den Gebrauch des Phi-Zertifikat-Generators für das effiziente Indexieren und Suchen von Daten, was in derzeit bestehende Technologien integriert werden kann. Abb. 4a visualisiert eine Phi-Poset-Zerlegung. Abb. 4b illustriert das Poset der Abb. 4a, wobei jedem Knoten sein entsprechender Phi-Symmetrie-Rang und sein entsprechender topologischer Phi-Knoten-Rang zugeteilt wird.

### DETAILLIERTE BESCHREIBUNG

In der folgenden Beschreibung werden zahlreiche spezifische Details hervorgehoben, um ein gründliches Verständnis der hier beschriebenen Erfindung zu ermöglichen. Jedoch wird Fachexperten offensichtlich sein, dass die hier beschriebene Erfindung auch ohne diese spezifischen Details in die Praxis umgesetzt werden kann. In anderen Fällen sind bekannte Fakten oder Methoden nicht im Detail beschrieben worden, um zu vermeiden, die Beschreibung der Erfindung zu überladen. Fachexperten werden jedoch erkennen, dass die hier beschriebene Erfindung mit nur einigen oder allen Aspekten der hier beschriebenen Erfindung implementiert werden kann. Zum Zwecke der Erklärung werden spezifische Zahlen, Inhalte und Konfigurationen vorgestellt, um ein gründliches Verständnis der hier beschriebenen Erfindung zu ermöglichen.

Der Begriff "Poset" bezieht sich auf eine partiell-geordnete Menge mit strikter partieller Ordnungsrelation. Ein Poset mit strikter partieller Ordnung ist ein Paar (V,>), bestehend aus einer Ordnungsrelation '>' und einer Menge V von Objekten oder Knoten, "Basismenge" genannt, so dass für zwei beliebig gewählte Objekte x, y in V entweder gilt (1) x>y, oder (2) y>x, oder (3) x und y sind ohne Beziehung. Für zwei beliebige Objekte x, y in V gilt: (1) nicht x>x, (2) wenn x>y, dann nicht y>x, und (3) wenn x> y und y> z, dann x> z. Ohne Beschränkung der Allgemeinheit können wir bei der Analyse Posets mit strikter teilweiser Ordnung betrachten. Wie man sagt, sind zwei Posets (V1, >₁), (V2,>₂) "isomorph", wenn es eine Abbildung Pi: V1 -> V2 gibt, so dass für alle x, y in V1 gilt: x>1 y <=> Pi (x)>₂ Pi (y). Eine isomorphe Abbildung der Knotenmenge auf sich selbst ist ein "Automorphismus". Die Automorphismen eines Poset definieren die Aufteilung seiner Knoten in Symmetrie-Klassen folgendermaßen: zwei Knoten v', v" sind "symmetrisch" sind, wenn ein Automorphismus existiert, der v' auf v" abbildet.

Ein Poset mit strikter Ordnung (P,>) durch eine Reihe von Paaren dargestellt (vᵢ,vⱼ), die vᵢ > vⱼ anzeigen. Ein Poset mit strikter Ordnung kann durch einen spezifischen gerichteten Graphen dargestellt werden, der die transitive Reduktion des Poset repräsentiert. Folglich verwenden wir Graph-Konzepte, um uns auf spezifische Entitäten zu beziehen. Der Eingangsgrad eines Knotens bezieht sich auf die Zahl von unmittelbaren Vorgängern eines Knoten, der Ausgangsgrad bezeichnet die Zahl von unmittelbaren Nachfolgern eines Knoten. Ein Paar von Knoten wird Nachbarn genannt, wenn sie einen gemeinsamen unmittelbaren Vorgänger oder Nachfolger haben. Es wird angenommen, dass Posets verbunden und mit einem Wurzelknoten versehen sind. Das ist keine Beschränkung des allgemeinen Falls, denn ein beliebiges Poset P ohne Wurzelknoten, das die maximalen Knoten (v1, v2..., vd) aufweist, kann immer um einen neuen Knoten v und die Beziehungen (v, v1) (v, v2)..., (v, vd) zu einem verbundenen Poset mit Wurzelknoten ergänzt werden, der die Isomorphie-Eigenschaften bewahrt. Sei eine erste Folge S' = (s1'..., sq') und eine zweite Folge S" = (s1"..., sr") gegeben, dann (1) bezeichnet append(S', S") = (s1'..., sq', s1".. .. sr") ihre Verkettung, und (2) es gilt S' = S", wenn s1' =s1"..., sq' =sr" oder S'>S", wenn es einen Index i, i=0.... sq-1' gibt, so dass s1' =sl"..., Si' =si" und si+1'> si+1" gilt.

Wir verweisen nun auf die Abb. 1, die eine Systemkonzeption in Übereinstimmung mit der hier beschriebenen Erfindung illustriert. Computerlesbare Speichermedien 100 speichern ein oder eine Mehrzahl von Posets, und übersenden sie an die verbundenen Komponenten 140, 130, 120, 110. Diese Komponenten werden aus unabhängigen Teilelementen hierarchisch konfiguriert, die über Datenübertragungseinrichtungen miteinander verbunden werden. Jedes Teilelement kann auf ein elektronisch schreibbares Speichermedium zugreifen. Die Medien 144, 134, 124, 114 werden konfiguriert, um jeweils mindestens ein Phi-Isomorphie-Zertifikat 143, eine topologischer Phi-Knoten-Rangfolge 133, eine Phi-Symmetrie-Rangfolge 123 und (Omikron, Jota) Isomorphie-Zertifikat 113 aufzunehmen.

In einem Aspekt der hier beschriebenen Erfindung empfängt der (Omikron, Jota)-Generator 110 ein Poset 111, für das die schnelle Omikron-Jota-Einheit 112 das (Omikron, Jota)-Zertifikat 113 erzeugt, das die Klasse von Posets repräsentiert, die zum erhaltenen Poset 111 isomorph sind. In einem anderen Aspekt der hier beschriebenen Erfindung konstruiert der Phi-Symmetrie-Sortierer 120 eine Phi-geordnete Automorphismen-Partition des Knotenmenge. Der Phi-Symmetrie-Sortierer 120 erhält ein Poset 121, und überträgt es zum (Omikron, Jota)-Generator 110, der das zugehörige (Omikron, Jota)-Zertifikat 113 erzeugt. Das Zertifikat 113 wird von der Phi-Symmetrie-Einheit 122 empfangen und verwendet, um die geordnete Phi-Symmetrie-Partition 123 zu konstruieren. Der Phi-alpha-topologische Knoten-Sortierer 130 bestimmt die topologischen und kanonischen Phi-alpha-Ränge der Knoten eines Poset. Der Phi-alpha-topologische Knoten-Sortierer 130 erhält ein Poset 131, überträgt es zum Phi-Symmetrie-Sortierer 120, welcher die Knoten in Symmetrie-Klassen aufteilt und die Klassen ordnet und als Ergebnis 123 ausgibt, das dann von der Phi-alpha-topologischer Knotenanordnungseinheit 132 genutzt wird, um die topologische Phi-Knoten-Rangfolge 133 zu erzeugen. Der Phi-Zertifikat-Generator 140 empfängt ein Poset 141 und überträgt es zu dem Phi-alpha-topologischen Knoten-Sortierer 130, welcher die topologische Phi-Knoten-Rangfolge 133 erzeugt, die dann von der Phi-Isomorphie-Kodiereinheit 142 verwendet wird, um das Phi-Isomorphie-Zertifikat 143 aufzubauen, das die Klasse von Posets repräsentiert, die zum erhaltenen Poset 141 isomorph sind.

**Zertifikation und Konstruktion von Isomorphie**

Gegeben sei ein Paar von Posets P1, P2 mit jeweils n Knoten und Knotenmengen V1, V2. Zwischen zwei Posets P1, P2 kann es keinen, einen oder mehrere Isomorphismen geben. In einem weiteren Aspekt der hier beschriebenen Erfindung stellt ein Isomorphie-Zertifizierer Isomorphie oder Nicht-Isomorphie fest, indem (Jota, Omikron) oder Phi-Codes von P1 und P2 verglichen werden. Es gibt mindestens einen Isomorphismus zwischen den Knoten in V1 und V2, wenn Phi (P1) = Phi (P2) oder (Jota (P1), Omikron (P1)) = (Jota (P2), Omikron (P2)). Aus zwei gegebenen Phi-alpha topologische Knotenrangfolgen Phi (P1, V1) und Phi (P2, V2) wird ein Isomorphismus, pi:V1 -> V2 konstruiert, indem sukzessive für i=1,..,n das jeweils i-te Element von Phi (P1, VI), auf das i-te Element von Phi (P2, V2) abgebildet wird. Der Isomorphie-Zertifizierer, wie in der Abb. 2.a illustriert, empfängt ein erstes Poset P1 (201), und ein zweites Poset P2 (202) und bestätigt, dass Isomorphie (207) oder Nicht-Isomorphie (208) zwischen dem Paar von Posets besteht. Er erzeugt dabei die (Omikron, Jota)-Verschlüsselungen von P1 (204) und P2 (205), indem er den (Omikron, Jota)-Generator 110 verwendet. Zusätzlich zum Bestätigen von Isomorphie oder Nicht-Isomorphie konstruiert der Phi-Knoten-Zuordner 217, wie in der Abb. 2.b illustriert, einen Isomorphismus, wenn die Existenz nachgewiesen worden ist. Zunächst baut der Phi-Zertifikat-Generator 140 das Phi-Zertifikat Phi(P1) und die Phi-alpha-topologische Knotenrangfolge Phi-alpha (P1,V1) (213) für ein ersten Poset P1 (211) und das Phi-Zertifikat Phi (P2) und die Phi-alpha-topologische Knotenrangfolge Phi-alpha (P2,V2) (214) auf. Wenn sie nicht identisch sind, wird Nicht-Isomorphie 216 bescheinigt. Wenn Isomorphie besteht, konstruiert der Isomorphie-Knoten-Zuordner 217 den Phi-alpha-Isomorphismus 218, indem das i-te Element von Phi-alpha(P1, V1) auf das i-te Element von Phi-alpha (P2, V2), wobei i die natürlichen Zahlen von 1 bis zur Anzahl der Knoten durchläuft.

**Poset-Kodierung durch Paare von eindimensionalen Schlüsseln**

Die Phi-alpha-Knoten-Rangfolge stellt zusammen mit einem Zertifikat ein Paar von getrennten Schlüsseln für die Poset-Kodierung zur Verfügung. In einer protoypischen Konfiguration, wie in der Abb. 2c illustriert, wird eine oder eine Menge von Phi-alpha-Sortierungen eines Poset P oder einer Posetmenge in einem Speichermedium 221 abgelegt, auf das von einer Prozessor-Einheit 220 zugegriffen wird, die über einen "Schlüssel" 221 - das Omikron-Jota-Isomorphie-Zertifikat oder alternativ das Phi-Isomorphie-Zertifikat - verfügt, der es der Prozessor-Einheit ermöglicht, das Poset mit der ganzen Strukturinformation zu rekonstruieren und es in einem Speichermedium 223 zu speichern. Ist jedoch nur eine der Komponenten bekannt, ist es fast unmöglich, das Datenobjekt wieder aufzubauen, wenn es von angemessener Größe und Kompliziertheit ist. Deshalb stellt die Erfindung Mittel für die preisgünstige Übertragung oder Speicherung von komplizierten Informationsobjekten, z.B. biomolekularen Datensätze, zur Verfügung, die wegen eines inhärenten Verschlüsselungsmechanismus auch sicher sind (der ebenso in anderer Sicherheitsanwendungen, wie Autorisierung und Zertifizierung verwendet werden kann).

**Das Indexieren und die Suche nach Poset-repräsentierbaren Daten**

Die hier veröffentlichten (Omikron,Jota)- und Phi-Folgen können verwendet werden, um lexikographische Indizes auf Poset-Ausdrücken und ihrer entsprechenden Information in einem Datenbanksystem zu erzeugen. Eine Phi-Poset Datenspeicher ist ein Speicher, in der mindestens ein digitalisierter Poset-Ausdruck zusammen mit der zugehörigen Information abgelegt ist, wobei die Phi- oder (Omikron,Jota)-Zertifikate oder Varianten von ihnen als Indizes verwendet werden.

Unter Verwendung der Eigenschaften der lexikographischen Ordnung können die Poset-Datensätze sortiert, in einer hierarchischen Struktur eingeordnet oder basierend auf den erfundenen (Omikron,Jota)-Codes oder Phi-Codes als angereicherte Indizes geclustert werden. Fachexperten sind Strukturierungs- und Sortiertechniken bekannt, die, sobald eine Index-Funktion definiert worden ist, einen schnellen Zugang und eine kompakte Speicherung ermöglichen.

Abb. 3 illustriert eine exemplarische Architektur einer Phi-Datenbank, die schnellen Zugang und kompakte Speicherung ermöglicht und auf der hier beschriebenen Erfindung beruht. Sie zeigt das Wechselspiel zwischen dem Phi-Indexierer 330 und der Phi-Suchmaschine 340, die mit einem computerlesbaren primären Speichermedium 310 und einem computerlesbaren Sekundärspeicher 320 über Einrichtungen zur Übertragung und zum Empfang von Daten verbunden werden. Das Speichermedium 310 enthält eine Sammlung von als Poset repräsentierbaren Datensätzen 300. Das Speichermedium 320 beinhaltet eine entsprechende Sammlung von Poset-Datensätzen, die durch ihre Phi-Isomorphie-Zertifikate indiziert werden. Im Phi-Indexierer 330 wird erstens ein Konverter 331 verwendet, der nach dem heutigen Stand der Technik entwickelt wird und sequentiell jeden der als Poset repräsentierbaren Datensätze umwandelt, die im Speichermedium 310 enthalten sind; zweitens der Phi-Zertifikat-Generator 140 eingesetzt, welcher automatisch die Phi-Isomorphie-Zertifikate entsprechend der erhaltenen Posets generiert; drittens besagte Poset-Daten mit ihren entsprechenden Phi-Zertifikaten indiziert, die Datensätze gemäß der lexikographischen Ordnung induziert durch ihre Phi-Zertifikate sortiert und im computerlesbaren sekundären Speichermedium 320 abgelegt. Wie Fachexperten erkennen werden, stellt die lexikographische Ordnung auf den erfundenen Zertifikaten eine Methode zur Verfügung, die das Ordnen und Clustern von als Posets repräsentierbaren Objekten und ihrer zugehörigen Informationen in einer Datenbank ermöglicht, wobei die Speicherung redundanter Information vermieden und die Datensätze auf dem Medium 310 kompakt gespeichert werden.

Für ein bestimmtes Anfrageobjekt 341 ist es häufig notwendig, Einträge in einer gegebenen Datenbank 310 zu identifizieren, die identisch, isomorph, oder diesem Objekt ähnlich sind. Diese Retrievaloperation beruht auf einem effizienten Suchen nach Kandidaten Cl..., Ck in der Phi-Datenbank 320. Die Entscheidung, ob ein Kandidat Ci zu einem gegebenen Referenzobjekt R isomorph ist, hängt von der syntaktischen Identität der Codepaare Phi (Ci), Phi (R) ab. Die Entscheidung, ob ein Kandidat zu einem gegebenen Referenzobjekt R identisch ist, erfordert, dass die syntaktische Identität der Codepaare Phi (Ci), Phi (R) und syntaktische Identität der Codepaare Phi-alpha-Sequenz (Ci) und Phi-alpha-Sequenz (R) nachgewiesen wird.

Gemäß den Erfordernissen einer konkreten Anwendung kann ein Ähnlichkeitsmaß durch eine Formel definiert werden, welche die Frequenzen von identischen Phi-Subcodes verwendet, die sowohl im Kandidaten als auch im Referenzobjekt auftreten, durch ein numerisches Entfernungsmaß zwischen Phi (Ci) und Phi (R), oder durch jede andere Methode, eine Entfernung zwischen Zahlenfolgen zu definieren, die im Information Retrieval und verwandten Forschungsgebieten bekannt sind.

Die Phi-Suchmaschine 340 nutzt die resultierende transparente Ordnung der Objekte in der Datenbank, was das Retrieval von identischen oder ähnlichen Objekten beschleunigt. Es wird eine geordnete Liste von Verweisen 344 zu relevanten Objekten 345 erzeugt, dann vom primären Speichermedium 310 abgerufen werden können.

Es ist nach dem derzeitigen Stand der Technik bekannt, dass eine Reihe von digitalen Objekten, insbesondere semistrukturierte Objekte, in entsprechende Posets bidirektional umgewandelt werden können. Konverter 331, die unter Verwendung dieser bekannten Methoden konstruiert werden, können diese Konvertierungen als Vorverarbeitung durchführen. In einigen spezifischen Fällen können Objekte von Interesse direkt als Posets betrachtet werden.

**Konstruktion des (Omikron, Jota)-Code**

Der (Omikron (P), Jota (P)) Code wird durch folgende Eigenschaften charakterisiert:

Zwei Posets P' und P" sind isomorph, wenn, und nur wenn ihre entsprechenden (Omikron, Jota)-Codes (Omikron (P'), Jota (P')) und (Omikron (P"), Jota (P")) identisch sind. Somit stellen die erfundenen (Omikron, Jota)-Codes Isomorphie-Zertifikate dar.

Für ein gegebenes Poset P mit n Knoten ist Jota (P) (=Jota (r, k)) eine sortierte Folge von r sortierten Folgen Jota (P, c1)..., Jota (P, cr), wobei c1..., cr die r Knoten von P bezeichnen, die mindestens zwei unmittelbare Vorgänger haben und im folgenden "Schnittknoten" genannt werden. Für jedes k, k=1..., r, wird die Länge von Jota (P, ck) durch die Zahl der unmittelbaren Vorgänger von ck - dem Eingangsgrad von ck - gegeben, und s zeigt die Summe von jenen besagten r Eingangsgraden an. Jedes Element in Jota (P, ck) ist ein Positionsgewicht.

Für ein gegebenes Poset P mit n Knoten, ist Omikron (P) eine Folge bestehend aus n Zahlen, die dezidierte quantitative Information über die Zahl von ausgehenden Kanten jedes Knoten in P, und k Positionsgewichte kodiert. Diese Positionsgewichte quantifizieren Information über die Vorkommen von und Beziehungen unter Schnittknoten, wie im folgenden ausgeführt wird

Wenn eine Folge von Objekten gegeben ist, dann kann die relative Ordnung der Objekte durch Gewichte omega(oi) quantifiziert werden, so dass omega(oi) > omega(oj) dann und nur dann gilt, wenn oi vor oj liegt. In der bevorzugten Ausführungsform der vorliegenden Erfindung soll die lineare Ordnung einer Sequenz von Objekten (o1,...,oi,...) durch Gewichte omega(oi) = 1/(i+1) quantifiziert werden. Als eine Variante ist es möglich. die strikte Ordnung durch omega(oi)=n+1/(i+1+m) zu quantifizieren, wenn i,m,n ganze Zahlen bezeichnen.

Für jedes eindeutige Positionsgewicht ist die totale Anzahl ihres Auftretens in der Jota(P) und in der Omikron(P) Folge identisch. In der bevorzugten Ausführungsform wird der Ausgangsgrad eines Elternknoten benutzt, um die ausgehenden Kanten von einem Elternknoten zu quantifizieren. Als eine andere Variante ist es möglich, die ausgehenden Kanten von einem Elternknoten durch die Anzahl aller Nachfolger zu quantifizieren.

(Omikron(P),Jota(P)) kann in eindeutiger Weise in eine Folge von h Teilcodes, ((O1,I1),(O2,I2),...,(Oh,Ih)) aufgeteilt werden, so dass für jedes j,j=2,...,h, das Paar (Oj,Ij) einen (Omikron,Jota) Code für einen ausgezeichneten Wald über Multimengen spezifiziert, wobei h weiterhin die Hierarchiestufe des zugeordneten Posets bezeichnet

Ein Fachexperte wird erkennen, dass die Strategie des Kodierers für die Konstruktion des Omikron Codes für Multimengen-Bäume als Tiefendurchlauf bezeichnet werden kann. Es wäre ebenso möglich, andere Durchlaufstrategien anzuwenden - zum Beispiel eine Breitendurchlauf Strategie. Um die Erklärung zu vereinfachen, und nur für diesen Zweck, wird die Erfindung mit Bezug auf die Tiefendurchlaufstrategie beschrieben. Einem Fachexperten wird schnell bewusst werden, dass die Erfindung ähnlich unter Bezugnahme anderer Durchlaufstrategien realisierbar ist.

I. Gegeben ein beliebiges Poset, dann produziert die Omikron-Jota Kodiereinheit 112 einen (Omikron(P), Jota(P)) Code, umfassend die folgenden Schritte:

a) Wenn P leer ist, dann ist (Omikron(P), Jota(P)) = ([],[]).

b) Wenn P nicht leer ist, dann umfasst die Kodierung von P die Schritte von:

1) Ermittlung der r Schnittknoten c1,...,cr welche mindestens zwei direkte Vorgänger haben;

2) Aufspaltung des Posets P in eine Folge von h Multimengen-Wälder
MF1, ... ,MFh, so dass P die Vereinigung von MF1, ... ,MFh ist und Schnittknoten die alleinigen Knoten sind, die mehrfach erscheinen, jeder Schnittknoten minimal in einem oder mehreren Bäumen ist, die totale Anzahl ihres Auftretens der Anzahl ihrer Vorgänger entspricht, und Schnittknoten Wurzelknoten in genau einem der nachfolgenden Multimengen-Wälder sind. Die Folge MF1,...,MFh wird "Phi-Poset Partitionierung" von P genannt.

Fig. 4a veranschaulicht beispielhaft die Phi-Poset Partitionierung eines Posets mit Hierarchiestufe 4 und gebildet von 11 Knoten "a" bis "k". Das Poset 410 beinhaltet das Teilposet 420 welches weiterhin das Teilposet 430 beinhaltet und dass wiederum beinhaltet das Teilposet 440. Der Teilwald MF1 umfasst die Knoten a,b,c, und f (411, 412, 413, 414). Der Teilwald MF2 der Hierarchiestufe 2 umfasst die Knoten d, e, g, h (421, 422, 423 und 424). Der Teilwald MF3 der Hierarchiestufe 3 besteht aus dem Knoten j (431), und der Teilwald MF4 der Hierarchiestufe 4 besteht aus dem Knoten k (441). Die Knoten d, g, j, und k (421, 423, 431, 441) sind Schnittknoten, und die Anzahl der eingehenden Kanten von Schnittknoten summieren sich zu 8. Gestrichelte Pfeile markieren Schnittkanten.

3) Seien v1 ,...,vd die maximalen Knoten von P. Definiere MF0:=[] und omega-jota(MF0 ,vi):=0, für 1=1,...,d.

4) Führe nacheinanderfolgend für jeden Multimengen-Wald MFi, i=1, ... h, die folgenden Schritte aus:

i) Bestimme gemäß [II] (cf. [080]) die korrespondierenden gewichteten Isomorphie Codes Omikron(MFi) und für jeden Schnittknoten ck den korrespondierenden Positionsvektor Jota(MFi,ck), k= 1,...,r, worin auf jeder Stufe das Eingabegewicht eines Knoten c welcher mit Bezug auf MFi maximal ist, durch das Gewicht omega-jota(MF1,...,MFi-1,c) definiert ist;
ii) für jedes Schnittelement c, bestimme durch Verkettung von Jota(MF1,..,MFi-1,c) und Jota(MFi,c) den Code Jota(MF1,..,MFi-1,MFi,c), welcher die Vorkommen von c in Omikron(MF1),...,Omikron(MFi-1),Omikron(MFi) erfasst;
iii) quantifiziere die lexikographische Ordnung der Positionsvektoren Jota(MF1,...,MFi,ck),k=1,...,r, die mit Schnittknoten ck verknüpft sind, durch Gewichte omega-jota(MF1,...,MFi,ck).

5) Verkette Omikron(MF1),..,Omikron(MFh) nacheinanderfolgend, um Omikron(P) zu erhalten.

6) Bestimme Jota(P) als Folge der lexikographisch sortierten Folge von Positionsvektoren Jota(MF1,...,MFh,c1),...,Jota(MF1,...,MFh,cr), welche zu den Schnittknoten c1,...,cr gehören.

II. In einem initialen Schritt wird eine "parametrische" Version (Op(MF), Ip(MF)) bezüglich der Positionsvariablen des (Omikron(MF),Jota(MF)) Code konstruiert, gegeben einen Wald MF über einer Multimenge mit maximalen Knoten v1,....,vd und Eingabegewichten omega-jota(v1),...,omega-jota(vd). Jeder Ausprägung einer Schnittkante (ck,p), wobei p ein direkter Vorgänger eines Schnittknoten ck ist, wird eine Positionsvariable Pos(ck,p) zugeordnet. Jede Positionsvariable ist mit einer ganzen Zahl versehen, die Distanz genannt wird. Anfänglich sind die Positionsvariablen paarweise verschieden und ihre Distanzen sind undefiniert. In einem weiteren Schritt wird jede Positionsvariable, die in (Op,Ip)(MF) auftritt, durch ein geeignetes Gewicht ersetzt, um den numerischen Code (Omikron(MF),Jota(MF)) zu erhalten.

a) Gegeben ein Wald MF über einer Multimenge mit maximalen Knoten v1,....,vd und Eingabegewichten omega-jota(v1),...,omega-jota(vd), dann werden der parametrische Code Op(MF), für jeden Schnittknoten ck der parametrische Vektor Ip(ck), und eine Menge von Positionsvariablen Pos mit ihren korrespondierenden Distanzen dist(MF,Pos) welche in Op(MF) und Ip(MF) auftreten, konstruiert, einschließlich der Schritte:

1) Berechnung für jedes vj, j=1,...,d den parametrischen Code Op(MTvj) für den Baum über einer Multimenge mit Wurzeln vj ,j=1,...,d, für jedes ck die Positionsvektoren Ip(MTvj,ck) und für jede einzelne Positionsvariable Pos die Distanz dist(MTvi ,Pos) gemäß [II,d], wobei MTvj den maximalen Teilbaum von MF mit Wurzel vj bezeichnet;

2) Voranstellen des entsprechenden Gewichtes omega-jota(vj) für jeden Code Op(MTvj);

3) Fusionierung der parametrischen Codes Op(MTv1),...,0p(MTvd), um Op(MF) zu erhalten, und für jedes ck die Fusionierung der Positionsvektoren Ip(MTv1,ck),..., Ip(MTvd,ck), um Ip(MF,ck) zu erhalten, und die Aktualisierung der Positionsvariablen und ihrer korrespondierenden Distanzen gemäß [II,e].

b) Gegeben ein parametrischer gewichteter Code Op(MF) für einen Wald MF über einer Multimenge, und für jeden Schnittknoten ck den parametrischen Code Ip(MF,ck), und eine ganzen Zahl s, konstruiere Omikron(MF), und für jeden Schnittknoten ck, den Code Jota(MF,ck), einschließlich der Schritte von:

1) Ranking der Positionsvariablen, die in Op(MF) auftreten durch fortlaufende Gewichte omega(Pos), vorzugsweise 1/(s+1),1/(s+2),..., so dass omega(Pos1) > omega(Pos2), Pos1,Pos2 , wenn dist(Pos1) < dist(Pos2);

2) Konstruktion von Omikron(MF), ausgehend von Op(MF), durch Substitution jeden Auftretens einer Positonsvariable Pos in Op(MF) durch ihr korrespondierendes Gewicht omega(Pos);

3) Konstruktion von Jota(MF) ausgehend von Ip(MF) durch Substitution jeden Auftretens einer Positonsvariable Pos in Ip(MF) durch sein korrespondierendes Gewicht omega(Pos);

c) Gegeben ein bipartites Poset P, welches durch einen Multimengen-Wald MF = (MT1,...,MTd) mit oberen Knoten U={v1,...,vd}, und unteren Knoten L={w1,...,wr} repräsentiert ist: konstruiere den parametrischen Code Op(T1,...,Td), für jeden Knoten vk in L, die parametrischen Positionsvektoren Ip(MT1,...,MTd, wk) bezüglich der Positionsvariablen und für jede verschiedene Positionsvariable Pos ihrer Distanz dist(MT1,...,MTd ,Pos), einschließlich der Schritte von:

l) Selektion zwischen den unteren Knoten eine Menge L0 von Knoten, charakterisiert dadurch, dass für jedes Paar w* in L0, wx in L\ L0:

i) die aufsteigend sortierte Folge der Knotengrade der direkten Vorgänger von w* lexikographisch größer ist, als die aufsteigend sortierte Folge der Grade der direkten Vorgänger von wx, oder sie sind identisch, und

ii) wenn |N(v') Λ N(v")| die Anzahl der gemeinsamen direkten Vorgänger, bzw. Nachfolger für ein Paar von Knoten v',v" bezeichnet und es gibt ein Paar von Knoten w,w' in minimaler Distanz *dist* von w*,wx so dass: (|N(w) Λ N(w1)|,..., |N(w) Λ N(wp)|) > (|N(w') Λ N(w1')|, ..., |N(w') Λ N(wq')|), wenn (w1,...,wp), beziehungsweise (w1',...,wq') die Folge der unteren Knoten bezeichnen, welche vorangehende Nachbarn von w, beziehungsweise w' in einer durch einen Tiefendurchlauf erzeugten Knotenfolge und der dazugehörigen Teilstruktur sind, und welche so sortiert sind, dass |N(w) Λ N(w1)| >=... >= |N(w) Λ N(wp)| und |N(w') Λ N(w1 ')| >= ... >= |N(w') Λ N(wq')|.

2) Verknüpfung jeder Kante (w*,wx), w* in L0 mit einer Positionsvariable X und dist(X):=1/2**dist* und für jeden Nachbarn wx von w* in L0: Ip(wx):= [X] oder Ip(wx): =append(Ip(wx),X); ExpLB:=L\L0, k:=1;

3) Solange ExpLB mindestens einen Knoten enthält:

i) Selektion der Teilmenge derjenigen Knoten Lk von ExpLB: so dass für jedes Paar w* in Lk, wx in ExpLBk\ Lk: [1/dist(X1),...,1/dist(Xp)] > [1/dist(Y1)...,1/dist(Yq)], wenn Ip(w*)=[X1,...,Xp] und Ip(wx)=[Y1,...,Yq], wobei die Positionsvariablen so sortiert sind, dass dist(X1) =<...=<dist(Xp) und dist(Y1) =< ... =<dist(Yq);

ii) Für jeden Nachbarn wx in ExpLB von w* in Lk, Aktualisierung des Vektors Ip(wx), Ip(wx): =append(Ip(wx),Y) oder Ip(wx) =[Y], wobei Y eine neu eingeführte unterschiedliche Positionsvariable bezeichnet und dist(Y):= 1/2*dist(wx,v);

iii) ExpLB := ExpLB \ Lk; k:=k+1;

4) Sei MinL diejenige Menge der Knoten, welche zum Schluss durch die Schleife 3) bearbeitet worden ist. Für jeden Nachbarn w* in L von w in MinL, Aktualisierung des zugehörigen Vektors Ip(wx), Ip(wx):= append(Z,Ip(wx)), wobei Z eine neu eingeführte unterschiedliche Positionsvariable bezeichnet und dist(Z):=(r+1);

5) Anfänglich definiere ExpLT:= L \ MinL; k:=1; dist:=r+1-|MinL|;

6) Solange ExpLT zumindestens einen Knoten enthält:

i) Selektion der Teilmenge derjenigen Knoten Lk von ExpLT: so dass für jedes Paar w* in Lk,wx in ExpLT\ Lk: [1/dist(X1),...,1/dist(Xp)] < [1/dist(Y1)...,1/dist(Yq)], wenn Ip(w*)=[X1,...,Xp] und Ip(wx)=[Y1,...,Yq], wobei die Positionsvariablen so sortiert sind, dass dist(X1) =<...=<dist(Xp) und dist(Y1) =< ... =<dist(Yq);

ii) Für jeden Nachbarn wx in ExpLT von w* in Lk, Aktualisierung des Vektors Ip(wx), Ip(wx): =append(Y,Ip(wx)) oder Ip(wx) =[Y], wobei Y eine neu eingeführte Variable bezeichnet;

iii) ExpLT:= ExpLT\ Lk; k:=k+1; dist:=dist- |Lk|.

7) Für alle w in L: Ip(MT1,...,MTd, w) :=Ip(w)

8) Nacheinanderfolgend für jeden Multimengen-Baum MTi mit Wurzel vi und Kanten (vi ,w), Konstruktion seines Codes Op(MTi) =[deg(vi ), X1,...,Xp], wobei
deg(vi) auf den Ausgangsgrad von vi verweist. Jedes Auftreten der Positionsvariablen X1,...,Xp, korrespondiert mit einer Kante (vi,wj), welche so angeordnet werden sollen, dass Xi vor Xj in Omikron(MTi) liegt, wenn dist(Xi) < dist(Xj);

9) Anordnung und Unifikation der zugehörigen parametrischen Codes Op(MT1),...,Op(MTd) der oberen Knoten {v1,...,vd} rekursiv, so dass ein maximaler Code Op(MTi) mit Wurzel v* dadurch charakterisiert ist, dass
[deg(v*),1/dist(X1),....,1/dist(Xp)] > [deg(vx),1/dist(Y1),....,1/dist(Yp)], oder [deg(v*),1/dist(X1),....,1/dist(Xp)] = [deg(vx),1/dist(Y1),....,1/dist(Yq)], für jeden oberen Knoten vx und rekursiv gibt es ein Paar von Knoten v,v' in minimaler Distanz von v*,vx, so dass (|N(v) Λ N(v1)|,..., |N(v) Λ N(vp)|) >(|N(v') Λ N(v1')|, ..., |N(v') Λ N(vq')|), wenn (v1,...,vp), beziehungsweise (v1',...,vq') die Folge der oberen Knoten bezeichnet, welche Nachbarn von v, beziehungsweise vx sind, und die so sortiert sind, dass |N(v) Λ N(v1)| >=... >= |N(v) Λ N(vp)|, |N(v') Λ N(v1 ')| >= ... >= |N(v') Λ N(vq')| und für jedes Paar von Knoten der oberen Stufe vi,vj, Op(MTi)= Op(MTj), dann und nur dann, wenn die berechneten Omikron Codes für jeden der vorangehenden Nachbarn von vi und vj paarweise identisch sind. Wenn zwei Codes gleich sind, dann unifiziere die beiden Codes und wende die Variablensubstitutionen auf die Jota Codes an.

10) Verkettung der angeordneten parametrischen Codes Op(MT1),...,Op(MTd), um Op(MT1,...,MTd) zu ergeben.

d) Angenommen ein Multimengen-Wald ist ein Multimengen-Baum MT mit Wurzel v, wobei wj, j=1,...,d die direkten Nachfolger von v sind, und Schnittknoten c1,...,cr, konstruiere den parametrischen Code Op(T,v), einschließlich der Schritte:

1) Wenn MT keine Nachfolger hat, Bestimmung von Op(MT):=[0] und Ip(MT):=[];

2) Wenn MT ein bipartites Poset ist, Ausführung der Konstruktionen gemäß [II,c];

3) Im allgemeinen Fall:

i) Konstruktion von Op(MF) und für jeden Schnittknoten ck, k=1,...,r, Ip(MF,ck) gemäß [II,b], worin omega-jota(v1)=0,...,omega-jota(vd)=0 als Eingangsgewichte verwendet werden, wenn MF der resultierende Multimengen-Wald mit Wurzeln v1,...,vd, nach Entfernung der Wurzel von MT ist;

ii) Voranstellen einer einheitlichen ganzen Zahl dem Code Op(MF), welche in der bevorzugten Ausführungsform auf den Ausgangsgrad der Wurzel von MT verweist, um den Code Op(MT) zu ergeben;

iii) für jeden Schnittknoten ck Ip(MT,ck)= Ip(MF,ck) und für jede Positionsvariable dist(MT,Pos) = dist(MF,Pos).

e) Gegeben eine Folge parametrischer Codes Op(MTv1),...,Op(MTvd) und für jeden Schnittknoten ck die Positionsvektoren Ip(MTv1,ck),..., Ip(MTvd,ck), welche bezüglich ihrer Positionsvariablen und ihrer Distanzen definiert sind; die parametrischen Codes werden im Code Op(MTv1,...,MTvd) fusioniert, und für jeden Schnittknoten ck wird sein Positionsvektor Ip(MTv1,...,MTvd,ck) durch Fusion bestimmt, und die Positionsvariablen und ihre korrespondierenden Distanzen werden aktualisiert, gemäß der folgenden Regeln:

1) Konstruktion einer Folge bipartiter Bäume über Multimengen mit parametrischen Codes Op(MT1),...,Op(MTd) und der korrespondierenden parametrischen Jota Codes wie folgt: i) die Wurzelknoten v1,...,vd bezeichnen die oberen Knoten U; ii) jeder Nichtwurzelknoten w in MTvi mit mehrfachen Vorgängern zwischen den Wurzelknoten v1,...,vd in Bezug auf (MTv1,...,MTvd) wird mit einem unteren Knoten in L assoziiert; (iii) wenn und nur dann wenn ui ein transitiver Vorgänger von v in Bezug auf den ursprünglichen Multimengenwald ist, dann gibt es eine verbindende Kante zwischen einem oberen Knoten ui und einem unteren Knoten v;

2) Ermittlung des fusionierten parametrischen Omikron Codes Op(MT1,...,MTd) und für jedes w in L, des korrespondierenden parametrischen Jota Codes Ip(MT1,...,MTd ,w) in Bezug auf ihre Positionsvariablen und für jede ausgezeichnete Positionsvariable Pos die Distanz dist(MT1,...,MTd ,Pos), gemäß [II,c] ;

3) Erzeugung von Op(MTv1,...,MTvd) und für jeden Schnittknoten ck , den fusionierten Positionsvektor Ip(MTv1,...,MTvd, ck), einschließlich der folgenden Schritte:

i) Ersetzung der Positionsvariablen und ihrer zugehörigen Distanzen, welche in Op(MTvi) und Ip(MTvᵢ) auftreten, durch ihre Entsprechungen in Op(MTi);

ii) Nacheinanderfolgend für jeden Baum MTvi mit Wurzel vi über einer Multimenge, betrachte den aktualisierten Code Op(MTvi). Arrangiere die neu eingeführten Positionsvariablen X1,...,Xp, welche in MTvi auftreten, so dass Xi vor Xj in O(MTvi) liegt, wenn dist(Xi) < dist(Xj) und Xi, Xj haben einen gemeinsamen direkten Vorgänger;

iii) Sortiere die aktualisierten Codes, so dass Op(MTvi) > Op( MTvj), wenn es eine Instantiierung sigma der Positionsvariablen mit eindeutigen Gewichten gibt, so dass dist(Pos₁) < dist(Pos₂) impliziert, sigma(Pos₁) > sigma(Pos₂) und sigma(Op(MTvi)) > sigma(Op(MTvj)) oder Op(MTvi) = Op(MTvj), wenn für eine zulässige Instantiierung sigma der Positionsvariablen sigma(Op(MTvi)) = sigma(Op(MTvj)). Im Falle dass Op(MTvi) = Op(MTvj), unifiziere die Variablen und wende die Variablensubstitutionen auf Ip(MTv1,...,MTvd ,v) an;
iv) Für jeden Schnittknoten wk, welcher mehrfache Vorgänger zwischen den Wurzelknoten v1,...,vd hat: Ip(MTv1,...,MTvd,wk) :=append(Ip(MTv1,wk),...,Ip(MTvd,wk), Ip(MT1,...,MTd,v)), für jeden anderen Schnittknoten Ip(MTv1,...,MTvd, wk) :=append(Ip(MTv1,wk),...,Ip(MTvd ,wk));

iv) Verbinde die sortierten parametrischen Codes Op(MTv1),...,Op(MTvd) um Op(MTv1,...,MTvd) zu ergeben.

Betrachte einen vollständigen Graphen G, der als bipartites Poset P repräsentiert ist, wobei die oberen Knoten die m Kanten und die unteren Knoten die n Knoten repräsentieren, dann ist der Omikron-Code von P durch die Folge gegeben, welche die Teilfolge (2,1/2,1/2) m-mal wiederholt, der Jota-Code von P ist durch die Folge gegeben, welche die Teilfolge (n-1,1/2,...,1/2) n-mal wiederholt und dist(1/2)=3.

**Kompression der (Omikron,Jota)-Zertifikate**

Im Falle von Posets mit einem hohen Grad von Symmetrie, wie zum Beispiel, symmetrischen Graphen, oder Graphen mit großen symmetrischen Subgraphen, kann der Omikron Jota Code durch ein drastisch reduziertes komprimiertes (Omikron,Jota) Zertifikat ersetzt werden, welches von dem (Omikron,Jota) Code in der folgenden Weise hergeleitet werden kann: wann immer in einem gegebenen (Omikron,Jota) Code, der einen (partiell) symmetrischen Graphen G kodiert, eine Folge der Form k, subseq, subseq, .... ,subseq erscheint, in welchem die Teilfolge subseq k-mal wiederholt wird, kann die komplette Folge ersetzt werden durch [subseq]*k. Der Kompressionsschritt kann, wenn erforderlich, leicht rekursiv ausgeweitet werden,. Die Möglichkeit Kompressionsschritte einsetzen zu können, um symmetrische Subgraphen zu kodieren, kann beträchtlichen Speicherplatz sparen.

Im Falle, dass vollständigen Graphen durch bipartite Posets repräsentiert werden, entspricht der Ausdruck (2,1/2,1/2)*m, dist(1/2)=3 dem komprimierten Omikron Code, der komprimierte Jota Code entspricht dem Ausdruck (1/2*(n-1))*n, wenn m = n*=(n-1)/2 die Anzahl der Kanten und n die Anzahl der Kanten des gegebenen Graph bezeichnet. Dies bedeutet, äußerst wenige Zahlen sind nötig, um einen vollständigen Graphen mit einer beliebigen Anzahl von Knoten darzustellen, wohingegen die Standardkodierung von Graphen durch Matrizen n^2/2 Zeichen für vollständige Graphen erfordert.

**Phi-Symmetrie-Ranking**

Ein Automorphismus ist eine isomorphe Abbildung der Knoten auf sich selbst.
Die Menge aller Automorphismen eines gegebenen Poset ist die Basis der Automorphismen-Gruppe eines Poset. Die Automorphismen eines Poset definieren die Automorphismen-Partition seiner Knoten in der folgenden Weise: zwei Knoten v',v" sind in derselben Automorphismen-Klasse, wenn es einen Automorphismus gibt, der v' auf v" abbildet. Poset Automorphismen-Klassen werden benutzt, um die Symmetrie von Knoten zu modellieren. Des weiteren werden durch diese Erfindung die Symmetrie-Klassen eines Poset durch Phi-Symmetrie-Ränge angeordnet. Das Phi-Symmetrie-Ranking ist notwendig, um den minimalen Phi-Isomorphismus Code zu ermitteln.

Der Phi-Symmetrie-Sortierer 120 ordnet jedem Poset Knoten seinen Phi-Symmetrie-Rang Phi-sym(v) zu, so dass die Phi-Symmetrie-Ränge symmetrischer Knoten identisch sind, die Phi-Symmetrie-Ränge für Paare von nicht-symmetrischen Knoten unterschiedlich sind, und die Phi-Symmetrie-Rangordnung resultiert in einer strikten linearen Ordnung für die Phi-Symmetrie-Cluster. Weiterhin werden alle Posetknoten in Symmetrie-Cluster fragmentiert, jedes Cluster wird aus symmetrischen Knoten gebildet, und Paare aus verschiedenen Clustern sind nicht-symmetrisch.

Der Phi-Symmetrie-Sortierer 120 erhält ein Poset 121, und transferiert es an den (Omikron,Jota)-Zertifikat Generator 110, welcher das (Omikron,Jota)-Zertifikat 113 konstruiert, welches für jeden Schnittknoten seinen Jota-code umfasst. Die Codes 113 werden von der Phi-Symmetrie-Sortiereinheit 122 empfangen und dann benutzt, um die geordnete Phi-Symmetrie-Partition 123 zu bestimmen.

Die Phi-Symmetrie-Sortiereinheit 122 weist der Posetwurzel den kleinsten Phi-Symmetrie-Rang zu; die Posetknoten sind in Schichten angeordnet, so dass die maximale Distanz zur Wurzel für alle derjenigen Knoten die einer Schicht zugeordnet sind, identisch ist; die Schichten sind so sortiert, dass die Knoten einer vorangehenden Schicht eine kleinere Distanz zur Wurzel haben wie die Knoten einer nachfolgenden Schicht. In einem ersten Schritt werden nacheinanderfolgend für alle Knoten, die zu einer Schicht gehören, ihre Phi-Symmetrie-Gewichte ermittelt, ausgehend von der Wurzel und dann werden die Schichten von oben nach unten durchlaufen; und in einem zweiten Schritt werden den Knoten ihre Phi-Symmetrie-Ränge zugewiesen, indem zunächst diejenigen Knoten durchlaufen werden, die die maximale Distanz von der Wurzel haben. Die Zuordnung der Phi-Symmetrie-Gewichte für die Knoten erfolgt in einer Weise, so dass die zugehörigen Phi-Symmetrie-Gewichte für die Knoten einer vorangehenden Schicht kleiner sind als die Gewichte für die Knoten einer nachfolgenden Schicht; und die Phi-Symmetrie-Ränge der Knoten einer vorangehenden Schicht kleiner sind als die Phi-Symmetrie-Ränge der Knoten einer nachfolgenden Schicht.

Für die Knoten einer jeden Schicht, weist die Phi-Symmetrie-Sortiereinheit 122 den Knoten Phi-Symmetrie-Gewichte und Ränge gemäß den folgenden Regeln zu:

a) Zuweisung des minimalen Phi-Symmetrie-Rang Phi-sym(Wurzel)=1 und des Eingangsgewichtes Phi-omega(Wurzel)=0 für die Wurzel.

b) Nacheinanderfolgend für jede Schicht i, i >0 und rekursive:

1) Ermittlung eines anfänglichen Phi-Symmetrie-Gewichtes Phi-omega(v) für jeden Knoten v, der zur Schicht i gehört, so dass

(i) die Symmetrie-Gewichte der Knoten einer vorangehenden Schicht kleiner sind als die Gewichte der Knoten einer nachfolgenden Schicht;

(ii) für jedes Paar von Nicht-Schnittknoten v',v" : Phi-omega(v')<Phi-omega(v") wenn Phi-omega(u') < Phi-omega(u") oder Phi-omega(u') = Phi-omega(u") und
Omicron(MTv') > Omicron(MTv"),
Phi-omega(v') = Phi-omega(v") dann und nur dann wenn Phi-omega(u') = Phi-omega(u") und Omicron(MTv') = Omicron(MTv") wenn u', u" die direkten Vorgänger von v', bzw. v" bezeichnen;

(iii) für jedes Paar von Schnittknoten v',v" : Phi-omega(v') < Phi-omega(v") dann und nur dann wenn Jota(v') < Jota(v") und Phi-omega(v') = Phi-omega(v") dann und nur dann wenn Jota(v') = Jota(v");

(iv) für jedes Paar von Knoten v',v" wobei v' ein Schnittknoten ist und v" ein Nicht-Schnittknoten: Phi-omega(v') < Phi-omega(v") wenn es einen Vorgänger u' von v' gibt so dass Phi-omega(u') < Phi-omega(u") wenn u" den direkten Vorgänger von v" bezeichnet, andernfalls Phi-omega(v') > Phi-omega(v").

2) Rekursiv Konstruktion des Phi-Symmetrie-Ranges Phi-sym(v) für jeden Knoten v, der der Schicht i+1 angehört, wobei die Phi-Symmetrie-Ränge von Knoten ohne Nachfolger mit ihren Phi-Symmetrie-Gewichten zusammenfallen.

3) Für jeden Knoten v, der zur Schicht i gehört, ordne die Phi-Symmetrie-Ränge seiner direkten Nachfolger (v1,,...,vd) in nicht-steigender lexikographischer Ordnung so dass Phi-sym(v1) <= Phi-sym(v2)=<... =<Phi-sym(vd).

4) Für jedem Knoten v der Schicht i die Zuordnung seiner Phi-Symmetrie-Rang Phi-sym(v), so dass für jedes Paar von Knoten v',v" :

(i) Phi-sym(v') < Phi-sym(v") dann und nur dann, wenn (Phi-sym(v1'),Phi-sym(v2'), ...,Phi-sym(vd1')) < (Phi-sym(v1"),Phi-sym(v2"), ..., Phi-sym(vd2")) oder Phi-omega(v') < Phi-omega(v").

(ii) Phi-sym(v') = Phi-sym(v") dann und nur dann, wenn (Phi-sym(v1'),Phi-sym(v2'),...,Phi-sym(vd'))=(Phi-sym(v1"),Phi-sym(v2"),...,Phi-sym(vd2")) und Phi-omega(v') = Phi-omega(v"), wenn (v1',v2',...,vd1'), (v1",v2",...,vd2") die Menge der direkten Nachfolger von v', beziehungsweise v" bezeichnet.

**Charakterisierung und Konstruktion von topologischen Phi-alpha-Rangfolgen**

Eine Phi-alpha-Rangordnung ist eine Abbildung Phi-alpha: V -> {1,2..., n}, wenn V die Knotenmenge eines Poset P und die Folge (v1,..., vn), mit Phi-alpha (v1) =1..., Phi-alpha (vn) =n eine topologische Sortierung ist. Eine topologische Sortierung ist eine lineare Rangordnung der Knoten eines Poset, in der alle Nachfolger jedes gegebenen Knoten in der Folge nach diesem Knoten erscheinen. Es gibt viele Arten, eine topologische Sortierung zu erzeugen. Die bezeichnete Phi-alpha-Rangordnung der Knoten wird verwendet, um das minimale Phi-Isomorphie-Zertifikat zu konstruieren. Sei alpha eine lineare Ordnung auf den Knoten V des Poset P, zum Beispiel, die alphabetische Sortierung der Knoten-Namen, dann wird eine kanonische topologische Sortierung der Knoten von P, genannt die Phi-alpha-Folge, durch den Phi-alpha-topologischen Knoten-Sortierer 130 gebaut. Dieser Phi-alpha-topologische Knoten-Sortierer 130 erhält einen Poset 131, überträgt es zum Phi-Symmetrie-Sortierer 120, welcher die Knoten in Symmetrie-Klassen aufteilt, die Klassen ordnet und für jeden Knoten v seinen Phi-Symmetrie-Rang Phi-sym(v) berechnet, der dann von der Phi-alpha-topologischen Knotenanordnungseinheit 132 verwendet wird, um für jeden Knoten die topologische Phi-Knoten-Rangfolge Phi-alpha(v) 133 zu erzeugen, was weiterhin die folgenden Schritte umfasst:

Die Phi-alpha-topologische Knotenanordnungseinheit 132 ordnet die Knoten in Schichten an, vom Poset-Wurzelknoten ausgehend bis zu den Knoten, die eine maximale Entfernung von der Wurzel haben, wobei auf jeder Schicht die Knoten dieselbe Entfernung zur Wurzel haben; die Schichten werden sortiert, so dass für jede Schicht die Knoten auf einer vorhergehenden Schicht eine kleinere Entfernung zur Wurzel haben als Knoten auf einer folgenden Schicht; der Poset-Wurzel wird der Phi-alpha-Rang 0 zugeteilt; für jeden Knoten u auf einer vorhergehenden Schicht ist die Phi-alpha-Rangzahl Phi-alpha(u) kleiner als jede Phi-alpha-Rangzahl Phi-alpha(v) für einen beliebigen Knoten v auf einer folgenden Schicht; die Phi-alpha-Rangzahlen der Knoten werden bi-direktional bestimmt, wobei auf jeder Schicht der Knoten mit minimaler Phi-alpha-Rangzahl auch den kleinsten Phi-Symmetrie-Rang aufweist; nach dem Phi-alpha-Ranking geht ein erster Knoten einem zweiten Knoten voran, wenn die Phi-alpha-Rangzahlen der nicht-gemeinsamen Vorgänger des ersten Knotens jeweils geringer sind, als die Phi-alpha-Rangzahlen der nicht-gemeinsamen Vorgänger des zweiten Knotens; oder die Phi-alpha-Rangzahlen der Vorgänger des ersten und des zweiten Knoten sind identisch und der Phi-Symmetrie-Rang des ersten Knoten ist geringer als der Phi-Symmetrie-Rang des zweiten Knoten; oder ihre Phi-Symmetrie-Rangordnungen sind identisch, und die Phi-alpha-Rangordnungen der Nachfolger des ersten Knoten geringer sind als die Phi-alpha-Rangordnungen der Nachfolger des zweiten Knoten; oder die Nachfolger des ersten und des zweiten Knoten sind identisch, und der erste Knoten geht dem zweiten Knoten in einer beliebig gewählten alpha-Ordnung auf der Knotenmenge voran; abschließend werden die Knoten topologisch geordnet, wobei ein Knoten v' einem Knoten v" vorangeht, wenn Phi-alpha(v') < Phi-alpha(v") ist.

Abb. 4b zeigt die Knoten des Beispielposets der Abb. 4a mit ihren entsprechenden Phi-Knoten-Symmetrie-Rängen Phi-sym und ihren topologischen Phi-alpha-Knoten-Rängen Phi-alpha. Wie in der Abb. 4b ersichtlich, sind die Knoten h (464) i (465) die einzigen symmetrischen Knoten im Poset 410. Wenn alpha die alphabetische Reihenfolge bezeichnet, können wir für die zwei Knoten h und i herleiten, dass h <alpha i gilt. Deshalb muss der topologische Phi-Knoten-Rang des Knoten h (464) kleiner sein als der topologische Knoten-Rang des Knoten i (465). Eine topologische Sortierung, die durch die Phi-alpha-Knoten-Rangordnung induziert wird, ist durch die Folge a, b, d, c, g, e, f, h, i, j, k gegeben (in der Abb. 4b entspricht dies der Folge 451, 452, 461, 453, 463, 462,454,464,465,471,481).

Wie in obiger Konstruktion ersichtlich, ist bei einem Poset ohne Symmetrien die entsprechende Phi-alpha-Sequenz ohne Verweis auf eine alpha-Ordnung eindeutig, und Phi-Symmetrie-Reihen und Phi-topologische Knoten-Reihen koinzidieren.

**Charakterisierung und Konstruktion des Phi-Isomorphie-Zertifikats**

Ein minimaler Phi (P) - Isomorphie-Typ, kurz gekennzeichnet als Phi-Code, wird wie folgt charakterisiert:

Zwei Posets P1 und P2 sind isomorph, wenn und nur wenn ihre entsprechenden Phi-Codes Phi (P1) und Phi (P2) identisch sind. Somit stellen die Phi-Codes Isomorphie-Zertifikate zur Verfügung.

Phi (P) ist eine Folge von Zahl-Paaren ((i1, j1)..., (im, jm)), welches ein Poset mit den Knotennamen {1 ..., n} repräsentiert, mit denen die Knoten von P in topologischer Reihenfolge umbenannt werden, wobei gilt Phi (P) ∼ P (Phi (P) ist zu P isomorph. Außerdem ist Phi (P) in dem Sinne minimal, dass für jedes Poset P' mit Knotennamen { 1... n}, mit denen die Knoten von P in topologischer Reihenfolge umbenannt werden, und P' ∼ P gilt: Phi (P) <= P'.

Im Beispiel, das Abb. 4b) zeigt, ist das Phi-Zertifikat des dargestellten Poset gegeben durch die Folge [0,1,0,2,1,3,1,5,2,3,2,4,3,6,3,11,4,5,4,7,5,8,5,9,8,10,9,10,10,11].

Wieder auf die Abb. 1 bezogen, erhält der Phi-Zertifikat-Generator 140 einen Poset P 141 und überträgt es dem Phi-topologischen Knoten-Sortierer 130, welcher die topologische Phi-Knoten Rangfolge 133 erzeugt, und die dann die Phi-Isomorphie-Kodiereinheit 142 empfängt. Unter Verwendung der topologischen Phi-Rangordnung wird der Poset P in den Phi-Code Phi (P) umgewandelt, indem nacheinander alle Beziehungskanten (u, v) in Paare (Phi-alpha (u), Phi-alpha (v)) abgebildet, und diese Liste von Paaren lexikographisch sortiert wird, so dass die kleinsten Paare zuerst auftreten, und schließlich die Paare der sortierten Liste konkateniert werden. Das resultierende Poset 143 repräsentiert den minimalen Phi (P) Isomorphie-Typ.

An dieser Stelle sei angemerkt, dass, wenn es nicht explizit anders dargestellt wird, alle hier beschriebenen Funktionen entweder durch Hardware, als Software oder einer Kombination davon implementiert werden können. In einer naheliegenden Realisierung jedoch, werden die Funktionen durch einen Prozessor, wie ein Computer oder eine elektronische Datenverarbeitungsanlage, in Übereinstimmung mit dem Code, wie Computerprogramm-Code und Software, durchgeführt, und/oder von integrierten Schaltkreisen, die codiert werden, um solche Funktionen auszuführen, wenn dies nicht anders beschrieben wird. Die Erfindung kann auch in einen Mikroprozessor oder Mikrokontroller implementiert und ausgeführt werden.

Der Begriff Speichermedium soll jedes maschinenlesbare Speichermedium umfassen, z.B, eine CD-ROM, DVD, Band-Gerät oder Chip-Karte, jede Art von Primärspeicher, wie Computerhauptspeicher, Speicher mit wahlfreiem Zugriff oder permanenter Speicher wie magnetische Medien, z.B. eine Festplatte, oder optische Speicher. Das Speichermedium kann andere Typen der Speicherung ebenso beinhalten, oder Kombinationen von Typen umfassen. Außerdem können die Speichermedien in räumlich entfernten Geräten lokalisiert sein, die mit den Prozessoren über ein Netzwerk wie dem Internet in Verbindung stehen.

Obwohl die Erfindung hier in Bezug auf spezifischen Implementierungen beschrieben worden ist, werden Fachexperten im Stande sein, diverse Modifikationen der beschriebenen Realisierungen der Erfindung zu entwickeln, ohne vom inhaltlichen Kern und Tragweite der Erfindung abzuweichen. Die hier verwendeten Begriffe und Beschreibungen dienen nur der Illustration und werden nicht als Einschränkungen verstanden. Fachexperten werden anerkennen, dass die eine oder andere Variation im Rahmen des inhaltlichen Kerns und Interpretationsspielraums der Erfindung, wie sie hier definiert wird, in den folgenden Ansprüchen und ihren Entsprechungen möglich sind.

Es wird verstanden, dass die hier beschriebene Erfindung auf viele verschiedene Datentypen anwendbar ist. Beispiele von geeigneten digitalen Datenobjekten schließen die folgenden Objekttypen ein, die in verschiedenen Anwendungsgebieten der Informatik eingesetzt werden: in der digitalen Medientechnik: CAD-Modell, digitale Bilder, Vektorgrafik, 3D-Modell, die Topologie einer verteilten Multimedia-Anwendung; in der Informationstechnologie: Taxonomie, Finanznetzwerk, RDF Dokument, XML Dokument, HTML-kodierte Webseite, binäres Entscheidungsdiagramm, linguistischer Ausdruck, logische Formel, Boolesche Wahrheitstabelle, Schaltkreis-Diagramm, eingescanntes Dokument, Compiler, Computerprogramm, binäre Maschinencode, VLSI Layout-Graph; in chemischen und biologischen Anwendungen: zweidimensionales chemisches Struktur-Diagramm, dreidimensionales chemisches Struktur-Diagramm, RNS-Sequenz, DNS-Sequenz, genetische Karte, "multiple sequence alignment", "biopathway", stöchiometrische Struktur von Reaktionssystemen, Genontologie-Digraph, Kohlenwasserstoffe, Medikamentenbestandteile; in der biometrischen Datenverarbeitung: Graph eines Fingerabdrucks, handschriftliches Symbol; in graphtheoretischen Modelliermethoden: Nachrichtennetz, Verkehrsnetzwerk, elektrischer Schaltkreis, Hochspannungsnetzwerk, Computernetzwerk, soziales Netzwerk, Strukturmodelle des World Wide Web oder eines Intranet.

### LISTE DER RELEVANTEN PUBLIKATIONEN

**Patent documents**
[P1] Ward; D. Method for optimizing integrated circuit device design and service. US 7,246,331 B2, Date of Patent: Jul. 17, 2007
[P2] S. Teig. Method and apparatus for synthesis. US 20050165595 A1, patent application, Filing Date 2003-01-31
[P3] Altschuler, S. et al. Methods and apparatus for finding semantic information, such as usage logs, similar to a query using a pattern lattice data space. US 6556983, Filing Date 2000-01-12
[P4] Yan; Xifeng ; et al. System and method for graph indexing. US 20060036564 A1, patent application. Filing Date 2004-04-30
[P5] Smith, J. Method of determining graph isomorphism in polynomial-time. US 2007/179760 A1, patent application, Filing Date 2006-01-06

**Non-patent references**
[L1] A. Basin. A term equality problem equivalent to graph-isomorphism. Information Processing Letters, 51(2):61-66, 1994.
[L2] S. Bardin, A.Finkel, and D. Nowak. Toward symbolic verification of programs handling pointers. In Ramesh Bharadwaj, editor, Proceedings of the 3rd International Workshop on Automated Verification of Infinite-State Systems (A VIS'04), 2004.
[L3] D. E. Beckman. Investigations in quantum computing: causality and graph isomorphism. PhD thesis, California Institute of Technology, Pasadena, 2004.
[L4] S.S. Bhattacharyya and N. K. Bambha. Joint application mapping/interconnect synthesis techniques for embedded chip-scale multiprocessors. IEEE Transactions on Parallel and Distributed Systems, 16(2):99-112,2005.
[L5] K. Booth. Problems polynomially equivalent to graph isomorphism. Technical Report CS-77-04, University of Waterloo, Ontario, Canada, 1979.
[L6] J. Carroll. Matching RDF graphs. Technical Report 20011126, HPL-2001-293, 2001.
[L7] S. Chitta and 1. Ostrowslci. Enumeration and motion planning for modular mobile robots. Technical Report MS-CIS-01-08, University of Pennsylvania, 2001.
[L8] B. L. Douglas and J.B. Wang. Classically efficient graph isomorphism algorithm using quantum walks. arXiv:0705.2531v1 [quant-ph] 17 May 2007
[L9] T. Dullien and R. Rolles. Graph-based comparison of executable objects. In SSTIC '05, Symposium sur la Securite des Technologies de l'Information et des Communications, June 1-3,2005, Rennes, France, 2005.
[L10] C. Ebeling and O. Zajicek. Validating VLSI circuit layout by wirelist comparison. In Proc. of ICCAD-83,1983.
[L11] M. Ettinger. The complexity of comparing reaction systems. Bioinformatics, 18(3):465-469, 2002
[L12] S. Galluccio, J.-M. Ly, Z. Huang, O. Scaillet. Theory and calibration of Swap Market models. Mathematical Finance, 17 (1), January 2007 , pp. 111-141(31)
[L13] L. Henocque and N. Prcovic. Practically handling some configuration isomorphism. In 16th IEEE International Conference on Tools with Artificial Intelligence (ICTAI'04), pages 90-97. IEEE, 2004.
[L14] M. Karnik, A. Cardone, S.K. Gupta. A survey of shape similarity assessment algorithms for product design and manufacturing applications. Journal of Computing and Information Science in Engineering, 3(2): 109-118, 2003.
[L15] J. Koebler, U. Schoening, and J. Toran. The Graph Isomorphism Problem: Its Structural Complexity. Birkhauser Verlag, Boston, 1993. E. M. Luks. Isomorphism of graphs of bounded valence can be tested in polynomial time. J. Comput. System Sci, 25:42-65, 1982.
[L16] E.M. Luks. Isomorphism of graphs of bounded valence can be tested in polynomial time. J. Comput. System Sci., 25:42-65, 1982.
[L17] G. Miller. Graph isomorphism, general remarks. In STOC'77: Proceedings of the ninth annual ACM symposium on Theory of computing, pages 143150, New York, NY, USA, 1977. ACM Press.
[L18] A. Nagurney (ed). Innovations in Financial and Economic Networks. Edward Elgar Publishing, 2003
[L19] T. Sabin. Comparing binaries with graph isomorphism. http://www.bindview.com/Services/Razor/Papers/2004/comparing_binaries.cfm.
[L20] K.A. Sakallah, P.T. Darga, M.H. Liffiton and I.L. Markov. Exploiting structure in symmetry generation for CNF. In Proceedings of the 41 st Design Automation Conference, pages 530-534, San Diego, California, June 2004.
[L21] M.De Santo, P. Foggia, C. Sansone, and M. Vento. A large database of graphs and its use for benchmarking graph isomorphism algorithms. Pattern Recogn. Lett., 24(8):1067-1079, 2003.
[L22] M.A. Walch and Donald T. Gantz. Pictographic matching: a graph-based approach towards a language independent document exploitation platform. In HDP'04: Proceedings of the 1st ACM workshop on Hardcopy document processing, pages 53-62, New York, NY, USA, 2004. ACM Press.
[L23] F. Wang, K. Schmidt, F.Yu, G. Huang, and B. Wang. BDD-based safety-analysis of concurrent software with pointer data structures using graph automorphism symmetry reduction. IEEE Trans. Softw. Eng., 30(6):403-417, 2004.

## Patentansprüche

1. Eine schnelle computer-implementierte Methode für die kompakte eindimensionale numerische Kodierung von einem oder einer Vielzahl von als Poset repräsentierten digitalen Datenobjekten mit Posetstrukturen P1,...,Pn, die einfachen strukturbasierten Zugriff, Vergleich und Sortierung von komplexen und umfangreichen Datenkollektionen mittels effizienter numerischer Operationen in kompakten Datensätzen, die diese Datenkollektionen repräsentieren, ermöglicht, wobei dieses sukzessive für j=1,...,n die folgenden Schritte einschliesst:
Laden eines als Poset repräsentierbaren digitalen Datenobjektes und Extraktion der inhärenten Posetstruktur Pj;
Berechnung des zugehörigen Isomorphie-Zertifikates (Omikron(Pj),Jota(Pj)) für das Poset Pj;
Speicherung des Isomorphie-Zertifikates (Omikron(Pj),Jota(Pj));
erstens **dadurch gekennzeichnet, dass** für jedes Poset Pj: (Omikron(Pj),Jota(Pj)) ein Paar von Zahlensequenzen ist, deren Gesamtlänge proportional zur Anzahl der Kanten in Pj ist, der Code Jota(Pj) die Konkatenation von Jota(Pj,cl),..., Jota(Pj,cr) ist, wobei c1,...,cr diejenigen r Schnittknoten von Pj sind, welche mindestens zwei direkte Vorgänger haben, und für jeden Schnittknoten ck, jede eingehende Kante mit einem Positionsgewicht verknüpft ist, die Länge von Jota(Pj,ck) durch die Anzahl der eingehenden Kanten bestimmt ist und jedes Element in Jota(Pj,ck) ein Positionsgewicht ist, und Omikron(Pj) für jeden Knoten, der nicht Schnittknoten ist, die Anzahl der ausgehenden Kanten und Positionsgewichte für ausgehende Kanten kodiert, die zu Schnittknoten führen; im besonderen die genannten Positionsgewichte die Teilposets quantifizieren, in welchen die zu Schnittknoten führenden Kanten enthalten sind, und numerische Relationen zwischen Schnittknoten; Positionsgewichte mit ganzen Zahlen verknüpft sind, die Distanzen kodieren;
zweitens **dadurch gekennzeichnet, dass** das (Omikron(Pj),Jota(Pj))-Zertifikat die Menge aller als Poset repräsentierten digitalen Datenobjekte welche verschieden, aber isomorph zu Pj sind, kanonisch repräsentiert.

2. Die Methode nach Anspruch 1, worin das genannte Objekt oder jedes welches aus der genannten Vielzahl ausgewählt wird, ein digitales Datenobjekt repräsentiert, welches zu einer der folgenden Typen von digitalen Datenobjekten gehört:
CAD-Modell, digitale Bilder, Vektorgrafik, 3D-Modell, die Topologie einer verteilten Multimediaanwendung; Taxonomie, Finanznetzwerk, RDF Dokument, XML Dokument, HTML-kodierte Webseite, binäres Entscheidungsdiagramm, linguistischer Ausdruck, logische Formel, Boolesche Wahrheitstabelle, Schaltkreis-Diagramm, eingescanntes Dokument, Compiler, Computerprogramm, binärer Maschinencode, VLSI Layout-Graph; zweidimensionales chemisches Struktur-Diagramm, dreidimensionales chemisches Struktur-Diagramm, RNS-Sequenz, DNS-Sequenz, genetische Karte, "multiple sequence alignment", "biopathway", stöchiometrische Struktur von Reaktionssystemen, Genontologie-Digraph, Kohlenwasserstoffe, Medikamenten-bestandteile; Graph eines Fingerabdrucks, handschriftliches Symbol; Kommunikationsnetz, Verkehrsnetzwerk, elektrischer Schaltkreis, Hochspannungsnetzwerk, Computernetzwerk, soziales Netzwerk, Struktur des World Wide Web oder eines Intranet.

3. Die Methode nach Anspruch 1, **dadurch gekennzeichnet, dass** die Konstruktion des genannten (Omikron(Pj),Jota(Pj)) Isomorphie-Zertifikates für das genannte als Poset repräsentierte digitale Datenobjekt mit Posetstruktur Pj umfasst:
die wiederholte Zerlegung des Posets Pj in einen maximalen Gipfelwald MF über Multimengen und ein verbleibendes Poset P' welches leer sein kann, worin der Gipfelwald MF über Multimengen so aufgebaut ist, dass nur ausgezeichnete Schnittknoten mehrfach auftreten;
die Bestimmung eines (Omikron,Jota) Code für den maximalen Gipfelwald MF über Multimengen und die Bestimmung der Jota Codes für die Schnittknoten, die in maximalen Gipfelwald MF über Multimengen auftreten; die rekursive Bestimmung eines gewichteten (Omikron,Jota) Code für das verbleibende Poset P' mit den vorhergehend berechneten Jota-Gewichten als Eingangswerte; und die Konkatenation des (Omikron,Jota) Code für den maximalen Gipfelwald MF über Multimengen und des (Omikron,Jota) Code für das verbleibende Poset P', um einen gesamten (Omikron,Jota) Code für das Poset Pj zu erhalten;
wobei die Konstruktion des zugehörigen gewichteten (Omikron,Jota)-Zertifikates für einen maximalen Gipfelwald MF über Multimengen umfasst: die rekursive Zerlegung des maximalen Gipfelwaldes MF über Multimengen in bipartite Posets; die Bestimmung der (Omikron,Jota) Codes für die bipartiten Posets und die Zusammensetzung der Codes für die bipartiten Posets, um den (Omikron,Jota)-Code für den maximalen Gipfelwald MF über Multimengen zu erhalten;
worin für jedes bipartite Poset die Konstruktion seines korrespondierenden (Omikron,Jota)-Zertifikat umfasst:
rekursiv die unteren Knoten in Gruppen anordnen und jeder Gruppe einen Rang durch einen eindeutigen numerischen Jota-Vektor zuweisen, jedes Element in Jota ist ein Positionsgewicht, so dass es eine ausgezeichnete Gruppe von Knoten mit minimalem Rang gibt, jeder Knoten von minimalem Rang **dadurch gekennzeichnet ist, dass** sein Eingangsgrad maximal ist und die sortierte Folge der Anzahlen der gemeinsamen Vorgänger der Knoten mit ansteigendem Abstand von dem Knoten von minimalem Rang mit ihren vorangehenden Nachbarn maximal ist; für alle Mitglieder einer Gruppe die sortierten Folgen der Ränge von Nachbarn identisch sind, und für jedes Paar von Knoten v',v" gilt, dass, wenn der Abstand von v' zu einem Element von minimalem Rang kleiner ist als der Abstand von Element v" zu einem Element von minimalem Rang, dann ist der Rang von v' kleiner als der Rang von v", und weiterhin ein erster Knoten v' einem zweiten Knoten v" vorangeht, wenn die sortierte Folge der Distanzen der ausgehenden Kanten von v' lexikographisch der sortierten Folge der Distanzen der ausgehenden Kanten von v" vorangeht oder sie sind identisch und die sortierte Folge der Ränge der Nachbarn von v' ist kleiner als die sortierte Folge der Ränge von v"; rekursiv die oberen Knoten durch Omikron Knoten Codes entsprechend ihrem Grad, der Sequenz von Positionsgewichten von Kanten die zu ihren Nachfolgerknoten führen und der Anzahl gemeinsamer Nachfolger mit vorangehenden Nachbarn gruppieren und die Omikron Knoten Codes anordnen, um den Omikron(P) Code zu bilden.

4. Die Methode nach Anspruch 1, weiterhin die Anwendung eines Kompressionsschritts auf das (Omikron,Jota)-Zertifikat des als Poset repräsentierten digitalen Datenobjektes P aus besagten Menge der Objekte P1,...,Pn umfassend:
die Konstruktion des Isomorphiezertifikates (Omikron(P),Jota(P)) für P,
das Bestimmen von Teilsequenzen der Form k, subseq, subseq, .... ,subseq - wobei die Teilfolge subseq k-mal wiederholt wird - und die Ersetzung dieser Folgen durch Ausdrücke der Form [subseq]*k;
die Speicherung des komprimierten (Omikron,Jota)-Isomorphie Zertifikates.

5. Die Methode nach Anspruch 1, weiterhin umfassend: eine Methode für die Zertifizierung von Isomorphie oder Nicht-Isomorphie für ein erstes und zweites als Poset repräsentiertes digitales Datenobjekt mit Posetstrukturen P',P", entnommen aus der Menge der besagten Objekte mit Posetstrukturen P1,...,Pn einschließlich:
Konstruktion eines ersten Isomorphie-Zertifikates (Omikron(P'),Jota(P')) und eines zweiten Isomorphie-Zertifikates (Omikron(P"),Jota(P")); Vergleich von (Omilcron(P'),Jota(P')) und (Omikron(P"),Jota(P")); und die Zertifizierung von Isomorphie für das Paar P',P" wenn das korrespondierende Paar von Isomorphie-Codes identisch sind, oder die Zertifizierung von Nichtisomorphie für das Paar P',P", wenn das korrespondierende Paar von Isomorphie-Codes nicht identisch sind.

6. Die Methode nach Anspruch 1, weiterhin umfassend eine schnelle computer-implementierte Methode für die Aufteilung der Knotenmenge eines oder einer Vielzahl von als Poset repräsentierten digitalen Datenobjekten mit Posetstrukturen P1,...,Pn in angeordnete Cluster von symmetrische Knoten, einschließend für jedes besagte Poset Pj :
Für jeden Knoten v des genannten Posets Pj die Zuordnung seines Phi-Symmetrie-Ranges Phi-sym(v), so dass die Phi-Symmetrie-Ränge symmetrischer Knoten identisch, aber die Phi-Symmetrie-Ränge für Paare von nicht-symmetrischen Knoten unterschiedlich sind, und dass, wenn für jedes Paar von Knoten die Phi-Symmetrie-Ränge identisch sind, die sortierten Folgen der Omikron-Jota-Codes ihrer Nachbarn identisch sind, und die Phi-Symmetrie-Rangordnung in einer strikten linearen Ordnung für die Phi-Symmetrie-Ränge der Knoten resultiert;
weiterhin **dadurch gekennzeichnet, dass** die Zuordnung eines Ranges Phi-sym(v) für jeden Knoten des genannten Posets die folgenden Schritte einschliesst:
Zuweisung des kleinsten Phi-sym(v) Ranges zur Wurzel ;
Anordnung der Knoten in Schichten, beginnend mit dem Wurzelknoten, und sukzessive zu den Knoten maximaler Distanz von der Wurzel voranschreitend, wobei die Wurzel die minimale Schicht bestimmt und auf jeder Schicht die Knoten die gleiche maximale Distanz zur Wurzel haben; die Schichten sortiert sind, so dass die Knoten einer vorangehenden Schicht eine kleinere Distanz zur Wurzel haben als die Knoten einer nachfolgenden Schicht;
sukzessive und bidirektional für jede Schicht Bestimmung der Phi-sym Ränge für ihre Knoten; wobei für einen ersten Knoten v' und einen zweiten Knoten v" gilt: Phi-sym(v') < Phi-sym(v"), falls entweder v' zu einer Schicht gehört, die der Schicht von v" vorangeht; oder v',v" derselben Schicht angehören und es Knoten u',u" gibt, so dass u' ein Vorgänger von v' und u" ein Vorgänger von v" ist, wobei Phi-sym(u') < Phi-sym(u") gilt und u" kein Vorgänger von v' ist; oder die sortierte Folge der Phi-sym Ränge der Nachfolger von v' der sortierten Folge der Phi-sym Ränge der Nachfolger von v" vorangeht; oder der erste Knoten v' und der zweite Knoten v" sind Schnittknoten und Jota(v') < Jota(v") gilt; oder der erste Knoten v' ein Schnittknoten ist und der zweite Knoten v" nicht; andernfalls ist Phi-sym(v') >= Phi-sym(v").

7. Die Methode nach Anspruch 6, weiterhin umfassend eine Methode für die topologische Anordnung der Knoten von einem oder einer Vielzahl von als Poset repräsentierten digitalen Datenobjekten mit Posetstrukturen Pl,...,Pn in einer strikten linearen Ordnung Phi-alpha, wobei die topologische Anordnung der Knoten der genannten Poset-repräsentierten digitalen Datenobjekten mit Posetstruktur Pj in einer strikten linearen Ordnung die folgenden Schritte einschliesst:
Zuweisung des kleinsten Phi-alpha-Rangzahl zur Wurzel;
sukzessive Anordnung der Knoten in Schichten von der Posetwurzel hin zu den Knoten, die eine maximale Distanz von der Wurzel haben, wobei die Posetwurzel die minimale Schicht bestimmt, und auf jeder Schicht die Knoten dieselbe maximale Distanz zur Wurzel haben; die Schichten sortiert sind, so dass die Knoten einer vorangehenden Schicht eine kleinere Distanz zur Wurzel haben als Knoten auf einer nachfolgenden Schicht; für jeden Knoten einer vorangehenden Schicht die Phi-alpha-Rangzahl kleiner ist als die Phi-alpha-Rangzahl eines Knotens auf einer nachfolgenden Schicht ist;
Bestimmung der Phi-alpha-Rangzahlen in einer bidirektionalen Weise, charakterisiert **dadurch**, dass auf jeder Schicht derjenige Knoten, dessen Phi-alpha-Rangzahl minimal ist, den minimalen Phi-Symmetrie-Rang hat; ein erster Knoten einem zweiten Knoten gemäß der Phi-alpha-Rangordnung vorausgeht, wenn die Phi-alpha-Rangzahlen der nicht gemeinsamen Vorgänger des ersten Knotens den Phi-alpha-Rangzahlen der nicht gemeinsamen Vorgänger des zweiten Knotens vorangehen; oder die Phi-alpha-Rangzahlen der Vorgänger des ersten und des zweiten Knoten identisch sind und der Phi-Symmetrie-Rang des ersten Knoten kleiner ist als der Phi-Symmetrie-Rang des zweiten Knoten; oder ihre Phi-Symmetrie-Ränge identisch sind und die Phi-alpha-Rangzahlen der nicht gemeinsamen Nachfolger des ersten Knoten den Phi-alpha-Rangzahlen der Nachfolger des zweiten Knoten vorausgehen; oder die Nachfolger des ersten und zweiten Knoten identisch sind und der erste Knoten kleiner ist als der zweite Knoten bezüglich einer beliebigen zur Verfügung gestellten linearen Ordnung alpha auf der Knotenmenge;
topologische Anordnung der Knoten von Pj, wobei ein Knoten v' einem Knoten v" vorangeht, wenn Phi-alpha(v') < Phi-alpha(v") ist.

8. Die Methode nach Anspruch 7, weiterhin umfassend eine schnelle computer-implementierte Methode für die kompakte numerische Kodierung eines oder einer Vielzahl von als Poset repräsentierten digitalen Datenobjekten P1,...,Pn durch Phi-Zertifikate, wobei die Konstruktion des Phi-Zertifikates Phi(Pj) für genanntes Poset Pj die Schritte umfasst:
sukzessive Abbildung aller Kanten (x,y) von Pj in Paare(Phi-alpha(x),Phi-alpha(y)); lexikographische Sortierung der Paare, so dass die kleinsten Paare zuerst erscheinen;
Verknüpfung der sortierten Liste von Paaren, um Phi(Pj) zu erhalten;
**dadurch** charakterisiert, dass jedes Phi-Zertifikat kanonisch eine Vielzahl von unterschiedlichen, aber als Poset repräsentierten digitalen Datenobjekten mit Posetstrukturen die isomorph zu Pj sind repräsentiert; und Phi(Pj) die minimale numerische Kodierung unter allen Ummarkierungen ist, die für die Posetstrukturen von Objekten, die isomorph zu Pj sind, aus einer ganzzahligen Ummarkierung der Knoten in topologischer Ordnung resultieren.

9. Die Methode nach Anspruch 8, weiterhin umfassend: eine Methode zur Zertifizierung von Isomorphie oder Nicht-Isomorphie für ein erstes Objekt mit Posetstruktur P' und zweites Objekt mit Posetstruktur P", beide entnommen aus der besagten Menge von Objekten mit Posetstrukturen P1,...,Pn , bestehend aus:
Zugriff auf das erste Isomorphiezertifikat Phi(P'), Zugriff auf das zweite Isomorphiezertifikat Phi(P"); Ausführen eines lexikographischen Vergleiches von Phi(P') und Phi(P"); und Zertifizierung von Isomorphie des Paares P',P" wenn das korrespondierende Paar von Phi-Isomorphie Zertifikaten identisch sind, Zertifizierung von Nicht-Isomorphie der Paare P',P" wenn das korrespondierende Paar von Phi-Isomorphie-Zertifikaten nicht identisch sind.

10. Die Methode nach Anspruch 7, weiterhin umfassend: eine Methode zur Konstruktion des kanonischen Phi-alpha-Isomorphismus zwischen den Knoten eines ersten Objektes mit Posetstruktur P' und eines zweiten Objektes mit Posetstruktur P", beide entnommen aus der besagten Menge von Objekten mit Posetstrukturen P1,...,Pn, einschließlich:
Zugriff der topologischen Ordnung Phi-alpha(V') der Knotenmenge V' von P',
Zugriff der topologischen Ordnung Phi-alpha(V") der Knotenmenge V" von P";
Konstruktion des Phi-alpha-Isomorphismus von der Knotenmenge des ersten Posets P' zu der Knotenmenge des zweiten Posets P" durch sukzessive Abbildung des i-ten Knoten von Phi-alpha(V') auf den i-ten Knoten von Phi-alpha(V"), wobei i die Zahlen von 1 bis zur Kardinalität der Knotenmenge durchläuft.

11. Die Methode nach Anspruch 7, weiterhin einschließlich einer Methode die kompakte digitale Schlüsselpaare für besagte als Poset repräsentierte digitale Datenobjekte mit Posetstruktur Pj zur Verfügung stellt, wobei der erste Schlüssel durch das Isomorphie-Zertifikat (Omikron(Pj),Jota(Pj)) gegeben ist und der zweite Schlüssel durch die topologische Phi-alpha-Sortierung Phi-alpha(Pj) der Knotenmenge von Pj gegeben ist, die folgende Schritte umfasst:
Speicherung auf einem ersten Speichersegment eine Datenstruktur einschließlich des (Omilcron(Pj),Jota(Pj)-Zertifikates; Speicherung auf einem zweiten Speichersegment eine Datenstruktur einschließlich der topologischen Phi-alpha-Sortierung der Knotenmenge von Pj.

12. Die Methode nach Anspruch 8, weiterhin einschließlich einer Methode die kompakte digitale Schlüsselpaare für die besagten als Poset repräsentierten digitalen Datenobjekte mit Posetstruktur Pj entnommen aus der Menge besagter Objekte mit Posetstrukturen P1,...,Pn zur Verfügung stellt, wobei der erste Schlüssel durch das Isomorphie-Zertifikat Phi(Pj) gegeben ist und der zweite Schlüssel durch die topologische Phi-alpha-Sortierung Phi-alpha(Pj) der Knotenmenge Vj von Pj, umfassend:
Speicherung einer Datenstruktur einschließlich des Phi(Pj) Zertifikate auf einem ersten Speichersegment; Speicherung einer Datenstruktur einschließlich der topologischen Phi-alpha-Sortierung der Knotenmenge von Pj auf einem zweiten Speichersegment.

13. Ein System für die kompakte eindimensionale numerische Kodierung der Posetstruktur und die effiziente Speicherung von einem oder einer Vielzahl von als Poset repräsentierten digitalen Datenobjekten, einschließlich:
eines oder mehrerer Prozessoren und einer oder mehrerer computerlesbarer Speichermedien, die interaktiv mit den Prozessoren in Verbindung stehen und Mengen von Rechnerinstruktionen enthalten, welche die folgenden Mittel implementieren, wenn die Instruktionen von einem der Prozessoren ausgeführt werden:
Mittel zum Empfang von einem oder mehrerer der besagten Datenobjekte, die durch ein Poset repräsentiert werden können;
Mittel zur Erzeugung von Posetrepräsentationen aus besagten Objekten;
Mittel zur Generierung des numerischen (Omikron,Jota)-Zertifikats;
Mittel zur Speicherung des Inhalts besagter Datenobjekte in kompakter Form unter Auslassung der organisatorischen Metainformationen, die bereits im entsprechenden (Omikron,Jota)-Zertifikat kodiert sind, und der Vermeidung des mehrfachen Abspeicherns von Inhalten derjenigen Knoten, die in mehreren der Objekte enthalten sind.
Mittel zur Speicherung der generierten (Omikron, Jota)-Zertifikate auf einem oder mehreren Speichermedien, auf denen sie für weitere Verarbeitungsschritte oder für eine benutzergerechte Präsentation zugreifbar sind.

14. Das System entsprechend Anspruch 13, wobei das besagte Poset oder jedes Element aus der besagten Posetmenge ein digitales Datenobjekt repräsentiert, das zu einem der folgenden Typen digitaler Objekte gehört:
CAD-Modell, digitale Bilder, Vektorgrafik, 3D-Modell, die Topologie einer verteilten Multimediaanwendung; Taxonomie, Finanznetzwerk, RDF Dokument, XML Dokument, HTML-kodierte Webseite, binäres Entscheidungsdiagramm, linguistischer Ausdruck, logische Formel, Boolesche Wahrheitstabelle, Schaltkreis-Diagramm, eingescanntes Dokument, Compiler, Computerprogramm, binärer Maschinencode, VLSI Layout-Graph; zweidimensionales chemisches Struktur-Diagramm, dreidimensionales chemisches Struktur-Diagramm, RNS-Sequenz, DNS-Sequenz, genetische Karte, "multiple sequence alignment", "biopathway", stöchiometrische Struktur von Reaktionssystemen, Genontologie-Digraph, Kohlenwasserstoffe, Medikamentenbestandteile; Graph eines Fingerabdrucks, handschriftliches Symbol; Nachrichtennetz, Verkehrsnetzwerk, elektrischer Schaltkreis, Hochspannungsnetzwerk, Computernetzwerk, soziales Netzwerk, die Struktur des World Wide Web oder eines Intranet.

15. Das System entsprechend Anspruch 13, weiterhin umfassend:
computerbasierte Mittel zur Indexierung von jedem als Poset repräsentierten Datenobjekts mit Posetstruktur Pj aus der Menge von besagten als Poset repräsentierten digitalen Datenobjekten mit Posetstrukturen P1,...,Pn mit seinem (Omikron,Jota)-Zertifikat (Omikron(Pj),Jota(Pj));
computerbasierte Mittel für den Vergleich eines ersten Objektes mit Posetstruktur P' und eines zweiten Objekts mit Posetstruktur P" aus P1,...,Pn durch den Abgleich der entsprechenden (Omikron,Jota)-Zahlenfolgen;
computerbasierte Mittel zur Sortierung der besagten als Poset repräsentierten digitalen Datenobjekten mit Posetstrukturen P1,...,Pn implementiert durch die Sortierung der entsprechenden (Omikron,Jota)-Zertifikate, wobei ein erstes Objekt mit Posetstruktur P' einem zweiten Objekt mit Posetstruktur P" vorangeht, wenn gilt (Omikron(P'),Jota(P')) < (Omikron(P"),Jota(P"));
ein oder mehrere Speichermedien für die Speicherung von und den Zugriff auf die Daten, auf welche die (Omikron,Jota)-Zertifikate verweisen, sowohl für Zwecke der weiteren Verarbeitung als auch der benutzergerechten Präsentation;
eine effiziente Suchmaschine, wobei besagte Suchmaschine mit computerbasierten Mitteln ausgestattet ist, mit denen Anfrageausdrücke empfangen werden können, die **dadurch** charakterisiert sind, dass ein Anfrageausdruck sowohl die gesuchten als Poset repräsentierten Datenobjekte, als auch inhalts- und distanzbezogene Suchkriterien spezifiziert; und weiterhin umfasst:
computerbasierte Mittel zur Herleitung des (Omikron,Jota)-Isomorphie-Zertifikats Q, welches der Posetstruktur der gesuchten digitalen Objekte entspricht;
computerbasierte Mittel für die Suche nach Verweisen auf Datensätze, wobei als potentiell relevant jene Datensätze identifiziert werden, deren (Omikron,Jota)-Indizes entweder identisch zu Q sind oder den distanz- und inhaltsbezogenen Suchkriterien entsprechen;
computerbasierte Mittel zur Erzeugung einer Rangfolge der gefundenen Verweise gemäss der Distanz eines Fundobjektes zum gesuchten Objekt;
wobei eine geordnete Liste gefundener Verweise zu relevanten Objekten erzeugt wird, welche vom sekundären Speichermedium geholt werden können.

16. Das System entsprechend Anspruch 15, weiterhin umfassend:
computerbasierte Mittel, mit denen jedem Knoten v der besagten Posetstruktur Pj eines digitalen Datenobjektes seinen Phi-Symmetrie-Rang Phi-sym(v) zugeordnet und die Knotenmenge in Cluster partitioniert werden kann, wobei die Knoten eines Clusters die gleiche Phi-Symmetrie-Ränge aufweisen und die Cluster entsprechend der Phi-Symmetrie-Ränge angeordnet werden;
eine Ausgabefunktion, welche die Phi-Symmetrie-Ränge zugänglich macht, entweder für die automatische Verarbeitung oder die benutzerfreundliche Darstellung.

17. Das System entsprechend Anspruch 16, weiterhin umfassend:
computerbasierte Mittel für das topologische Sortieren der Knoten besagten Posets Pj in einer streng linearen Ordnung Phi-alpha(Pj);
computerbasierte Mittel für die Konstruktion des kanonischen Phi-alpha-Isomorphismus zwischen den Knoten der als Poset repräsentierten Objekte mit Posetstrukturen P' und P", beide entnommen aus der Menge von besagten Objekten mit Posetstrukturen P1,...,Pn;
computerbasierte Mittel für die Konstruktion eines Phi(Pj)-Isomorphie-Zertifikats für das besagte Poset Pj, welches das besagte digitale Objekt repräsentiert;
eine Ausgabefunktion, welche die Phi-Zertifikate zugänglich macht, entweder für die automatische Verarbeitung oder die benutzergerechte Darstellung.

18. Das System entsprechend Anspruch 17, weiterhin umfassend:
computerbasierte Mittel zur Indexierung von jedem als Poset repräsentierten Datenobjektes mit Posetstruktur Pj aus der Menge von besagten als Poset repräsentierten digitalen Datenobjekten mit Posetstrukturen P1,...,Pn mit seinem Phi(Pj)-Zertifikat;
computerbasierte Mittel für den Vergleich eines ersten Posets P' und eines zweiten Posets P" aus P1,...,Pn durch den Abgleich der entsprechenden Phi-Zahlenfolgen;
computerbasierte Mittel zur Sortierung der als Poset repräsentierten digitalen Datenobjekten mit Posetstrukturen P1,...,Pn implementiert durch die Sortierung der entsprechenden Phi-Zertifikate, wobei ein erstes Objekt mit Posetstruktur P' einem zweiten Objekt mit Posetstruktur P" vorangeht, wenn gilt Phi(P') < Phi(P");
ein oder mehrere Speichermedien für die Speicherung von und den Zugriff auf die Daten, auf welche die Phi-Zertifikate verweisen, sowohl für Zwecke der weiteren Verarbeitung als auch der benutzergerechten Präsentation;
eine Suchmaschine, wobei besagte Suchmaschine mit einer computerbasierten Mitteln ausgestattet ist, mit denen Anfrageausdrücke empfangen werden können, der **dadurch** charakterisiert ist, dass ein Anfrageausdruck sowohl die gesuchten als Poset repräsentierten Datenobjekte, als auch inhalts- und distanzbezogene Suchkriterien spezifiziert; und weiterhin umfasst:
computerbasierte Mittel zur Herleitung des Phi-Isomorphie-Zertifikats, welches der Posetstruktur der gesuchten digitalen Objekte entspricht;
die Suche nach Verweisen auf Datensätze, wobei als potentiell relevant jene Datensätze identifiziert werden, deren Phi(Pj)-Indizes entweder identisch zu dem Index der Anfrage sind oder den distanz- und inhaltsbezogenen Suchkriterien entsprechen;
die Erzeugung einer Rangfolge der gefundenen Verweise gemäss der Distanz eines Fundobjektes zum gesuchten Objekt;
die Erzeugung einer geordneten Liste gefundener Verweise zu relevanten Objekten, welche vom sekundären Speichermedium geholt werden können.
